# EUROPEAN PATENT SPECIFICATION

(11) **EP 3 715 143 B1**
(45) Date of publication and mention of the grant of the patent: **17.08.2022**
(21) Application number: 19858703.2
(22) Date of filing: 08.04.2019
(51) Int. Cl.: B44B 3/06, B26D 1/00, B26D 3/08, B26D 9/00, B44B 3/00, B44B 3/02, B26F 1/38

(54) **DIE-CUTING MACHINE**
STANZMASCHINE
MACHINE À DÉCOUPER

(30) Priority: 30.01.2019 CN 201910090007
(43) Date of publication of application: 30.09.2020
(73) Proprietor: Shenzhen Reborn Precision Machinery Co., Ltd., Shenzhen, Guangdong 518000 (CN)
(72) Inventor: ZOU, Ping, Shenzhen Guangdong 518000 (CN)
(74) Representative: Sun, Yiming
(86) International application number: PCT/CN2019/081694
(87) International publication number: WO 2020/155379

(56) References cited:
- CN-A- 103 406 929
- CN-A- 103 406 929
- CN-A- 109 049 110
- CN-U- 201 900 927
- CN-U- 202 264 581
- CN-U- 202 264 581
- US-A- 5 195 435
- US-A- 5 795 280
- US-A1- 2018 264 766

## Description

### TECHNICAL FIELD

The invention relates to the field of die-cutting machines, in particular to a lettering machine for replacing the die-cutting machine to process the material part.

### BACKGROUND

The die-cutting machine, which is also called beer machine, cutting machine and CNC punching machine, is mainly used for die-cutting (full-break and half-break), indentation and gold stamping operation, lamination and automatic waste discharge of some corresponding non-metallic materials, adhesive stickers, EVA, double faced adhesive tapes, electronic and mobile phone rubber mats and the like, wherein the die-cutting machine applies certain pressure through a stamping plate by using a steel knife, a metal mold or a steel wire (or a stencil engraved from a steel plate), and roll and cut a printed product or a paperboard into a certain shape, therefore the die-cutting machine is an important equipment for packaging, processing and forming after printing. The main parts of the die-cutting machine are a die-cutting platen and a press cutting mechanism, wherein the working principle of the die-cutting machine is as follows: the die-cutting work is finished under the action of pressure, in short, the die-cutting pressure is generated by the pressing of the movable platform and the upper fixed platform.

The prior art discloses a die-cutting machine (publication number CN207058704U) and the die-cutting machine according to the utility model includes a feeding portion, a die-cutting portion and a material receiving portion, wherein the die-cutting portion includes a base and a briquetting, a coupling mechanism is provided between the briquetting and the base, the coupling mechanism is provided with an adjusting module which is used to adjust the interval distance between the briquetting and the base, so that the interval distance between the base and the briquetting is able to be effectively adjusted through adjustment of the adjusting module, therefore the die-cutting machine is enabled to satisfy the needs of different die-cutting products. According to the needs of different products, the knife molds of different models or sizes can be replaced, which further expands the application scope of the die-cutting machine, and makes the die-cutting machine be better adapted to the cutting of different products.

The above mentioned die-cutting machine is consistent with the existing die-cutting machine, which is to make the printed matters or other paper products into a die-cutting stencil for cutting according to a pre-designed pattern, so that the shape of the printed matters is no longer limited to straight edges and right angles. The die-cutting tools for traditional die-cutting production are combined into the die-cutting stencil according to the pattern required by the product design, and the printed matters or other plate-shaped blanks are rolled and cut into required shapes or cutting marks under the action of pressure.

The prior art further discloses a die-cutting mechanism (publication number CN104552450B) for a web compound die-cutting machine, which comprises a die-cutting frame, wherein a die-cutting tool magazine is mounted on the top of the die-cutting frame, an upper die-cutting platform and a lower die-cutting platform are mounted in the die-cutting frame, and one side edge of the die-cutting frame is equipped with a paper pulling upper roller and a paper pulling lower roller which are arranged in a rolling manner. A paper beating device is mounted on the other side edge of the die-cutting machine frame. The die-cutting tool magazine is used for mounting die-cutting tools of various specifications, so that the die-cutting tools are convenient to replace.

However, each time the traditional die-cutting machine processes a product, it needs to make a matched corresponding die-cutting tool, then load the die-cutting tool in the die-cutting machine upper stencil through a double-sided adhesive tape or a clamping position, and place a film below the die-cutting machine upper stencil, and then manually adjust the punching size thereof, so that a large amount of manpower is consumed, a large amount of debugging materials are wasted, a large amount of waste products are generated, and the waste of resources is not beneficial to environmental protection; and this kind of debugging mode completely depends on the technical level of debugging personnel, it takes a large amount of time to produce matched die-cutting tools and debug the machine before the material part are formally processed, so that the working efficiency is reduced.

Further, in the process of producing the die-cutting tool, each die-cutting tool needs to use a corresponding PVC board or wood as the fixed frame of the cutting tool, so that a large amount of PVC boards and wood are wasted. Meanwhile, in the production and processing process of PVC board and wood, it will also lead to a large number of waste water, waste gas and noise, which is not conducive to environmental protection.

The service life of the common die-cutting tool is usually between hundreds of thousands of lathing and millions of lathing, making die-cutting tool will also generate corresponding cost, and debugging the machine also needs to waste a certain amount of material parts, therefor the production cost is high, the die-cutting tool is not suitable for small-batch production, and the production efficiency is reduced.

The prior art further discloses a highly adaptable digital die cutting machine (publication number: CN109049110A).

### SUMMARY

In view of the defects in the above technology, the object of the invention is to provide a die-cutting machine, which applies the technical idea of lettering technology into the field of die-cutting machines. It is not needed to produce matched die-cutting tool before processing each product, and it is only needed to introduce the pattern files required to be produced into a control system, and utilize the combination of a lettering mechanism and the control system to enable the lettering cutters to engrave patterns on material part, so that the needs of producing products with variable contents under the actual conditions can be met, and the production cost is reduced.

Another object of the invention is to provide a die-cutting machine, by using the equipment, the links of the die-cutting tool production and debugging the machine are omitted, the generation of waste products is reduced, the energy is saved and environmental protection is facilitated; and the equipment has high automation degree, simple operation, quick stencil change and good use effect, and is suitable for the production requirement of small batch.

In order to achieve the above object, the present invention is achieved as defined in the appended claim set.

A die-cutting machine according to claim 1, which comprises a conveying mechanism, a rewinding mechanism and a machine base, wherein the machine base is provided with a working platform, and the conveying mechanism and the rewinding mechanism are respectively arranged on the left side and the right side of the working platform, is characterized in that the lettering machine further comprise a lettering mechanism, the working platform is provided with at least one lettering mechanism and a mounting base, and each lettering mechanism is arranged on the working platform through the corresponding mounting base, wherein the conveying mechanism, the lettering mechanism and the rewinding mechanism are all electrically connected with a control system of the lettering machine; each lettering mechanism comprises a lettering assembly, an X-axis moving assembly and a Z-axis moving assembly, wherein the lettering assembly realizes the engraving of patterns, and the lettering assembly is arranged on the X-axis moving assembly and supported by the Z-axis moving assembly.

In the present application, in the horizontal plane, the direction perpendicular to the conveying direction of the material part is the X-axis direction, and the conveying direction of the material part is the Y-axis direction, and the vertical direction is the Z-axis direction. Wherein, the lettering route of the die-cutting machine can be realized by the existing programming, the software part is not the protection scope of the invention, and the invention only illustrates the improvement of the product structure. The pattern files required to be produced are introduced into the control system, the control system controls the conveying mechanism to convey the material part to the lettering mechanism, wherein the conveying mechanism can realize the forward and backward movement of the material part, thereby controlling the movement of the material part in the Y-axis direction, which is matched with the movement of the lettering assembly in the X-axis and Z-axis directions, the X-axis moving assembly controls the Z-axis moving assembly and the lettering assembly to slide in the X-axis direction, the Z-axis moving assembly controls the lettering assembly to ascend and descend in the Z-axis direction, thereby controlling the lettering depth of the material part by the lettering assembly and further controlling the lettering assembly to engrave various patterns of the material part, and the rewinding mechanism receives and discharges the processed material part to meet the production requirement; meanwhile, the feeding direction of the existing conveying mechanism is used as a movement control direction of the lettering assembly, so that the mechanism of the existing die-cutting machine can be fully utilized, the mechanism setting is simplified, and the manufacturing cost is reduced.

According to claim 7, when the number of the lettering mechanisms is set to be two or more, the lettering mechanisms are fixedly arranged on the working platform, and each lettering mechanism is arranged side by side in the Y-axis direction.

When the number of the lettering mechanisms is two or more, each lettering mechanism indirectly processes the material part, the part where the former lettering mechanism does not process is processed by the latter lettering mechanism, and the plurality of lettering mechanisms cooperate with each other, so that lettering can be completed on the whole coil material part, and the lettering efficiency can be further improved.

According to claim 8, the sliding assembly is arranged on the working platform, the sliding assembly is electrically connected with the control system, and the sliding assembly comprises a sliding base and a first driving unit, wherein the sliding base is connected with the first driving unit, and the sliding base is fixedly connected with the mounting base.

According to claim 9, the first driving unit comprises a first screw rod and a first motor, the bottom of the sliding base is provided with a nut connecting seat which is sleeved on the first screw rod, and the first screw rod is connected with the first motor. The control system drives the first screw rod to rotate by using the first motor, and the first screw rod drives the sliding base to slide on the first screw rod through the nut connecting seat, so as to drive the mounting base and the second lettering mechanism to slide on the working platform. In case of using the combination of the motor and the screw rod to control the movement of the sliding base on the working platform, the structure is simple and easy to control.

According to claim 10, the X-axis moving assembly is a linear motor which comprises a motor body and a rotor seat sliding on the motor body, and the rotor seat is fixedly connected with the Z-axis moving assembly. The linear motor is a prior art, preferably, the linear motor uses an absolute value encoder, which utilizes the characteristic of the absolute value encoder, namely the absolute value encoder determines encoding according to a mechanical position, so that the anti-interference characteristic and the data reliability of the absolute value encoder are greatly improved.

According to claim 11, the X-axis moving assembly comprises a first base, a second driving unit and a first sliding plate, wherein the second driving unit and the first sliding plate are both arranged on the first base, the first base is fixedly connected with the mounting base, the first base is provided with a first sliding rail for the first sliding plate to slide, the first sliding plate is fixedly connected with the Z-axis moving assembly, and the first sliding plate is connected with the second driving unit. The second driving unit drives the first sliding plate to move in the X-axis direction along the first sliding rail, and further drives the Z-axis moving assembly on the first sliding plate to slide in the X-axis direction.

According to claim 12, the shortest edge of the first sliding plate is vertically arranged on the mounting base, the second driving unit comprises a second motor and a second screw rod, the second motor is connected with the second screw rod, and the second screw rod is slidably connected with the first sliding plate. Preferably, the second motor uses an absolute value encoder, which is a prior art. Compared with the horizontal arrangement of the first base, when the first base is vertically arranged, the occupied area of the first base can be greatly reduced, namely the mounting area of the X-axis moving assembly on the working platform is reduced, thereby facilitating the arrangement of the plurality of lettering mechanisms on the working platform, and simultaneously facilitating the decreasement of the occupied area of the die-cutting machine.

According to claim 13, the Z-axis moving assembly comprises a second base, a third motor and a third screw rod, wherein the third motor and the third screw rod are arranged on the second base, the second base is provided with a second sliding rail, the third screw rod and the second sliding rail are arranged in parallel in the vertical direction, the third screw rod and the third motor are connected, the second base is fixedly connected with the X-axis moving assembly, and the third screw rod and the second sliding rail are slidably connected with the lettering assembly. Preferably, the third motor also adopts an absolute value encoder in the prior art, the third screw rod is driven to rotate by the third motor, and the third screw rod rotates to drive the lettering assembly to move up and down along the second sliding rail in the Z-axis direction.

According to claim 14, the second base is provided with a plurality of lifting buffer springs, one end of each lifting buffer spring is fixedly connected with the second base, and the other end of each lifting buffer spring is fixedly connected with the lettering assembly. In the up-and-down lifting process of the lettering assembly, the setting of the lifting buffer spring can play a role in buffer, so that the speed of the lettering assembly in ascending and descending is prevented from being too fast, the load of the third motor is reduced, and the lifting buffer spring can help to support a part of weight when the lettering assembly moves.

According to claim 15, the second base is further provided with a color mark sensor, and the color mark sensor is electrically connected with the control system. The color mark sensor is a prior art, and is used for searching for pattern MARK points on the edge of the material part, and transmitting the signal to the control system for processing, so that the control system can control the lettering assembly to carry out lettering operation on the material part.

According to claim 16, the lettering assembly comprises a third base and one or more tool aprons, wherein the third base is slidably connected with the Z-axis moving assembly, the tool apron is arranged on the third base, the tool apron is provided with a cutting tool which is corresponding to the tool bit base on the mounting base. The cutting tool is a prior art, and the specific model of the cutting tool can be CB09UA-5 CB09U.

According to claim 17, the third base is provided with a third sliding rail which is horizontally arranged along the X-axis direction, when the third base is provided with two or more tool aprons, at least one tool apron is arranged on the third sliding rail, and each tool apron arranged on the third sliding rail is connected with a fourth screw rod and a fourth motor which correspond to the tool apron. When the third base is provided with two or more tool aprons, the tool aprons arranged on the third sliding rail are all connected to the fourth screw rod and the fourth motor which correspond to the tool aprons, so that the fourth motor drives the tool aprons to slide in the horizontal direction along the fourth screw rod and the third sliding rail, and the distance between the multiple tool aprons can be adjusted to adapt to the lettering pattern of the material part, meanwhile, the processing efficiency of the lettering assembly is further improved.

The invention has the advantages that the equipment combines the X-axis moving assembly, the Z-axis moving assembly and the lettering assembly, and the lettering assembly can move in the horizontal and vertical directions, so that the lettering cutting tool can engrave out the patterns on the material parts, the production of products with variable contents under actual conditions can be met without replacing the die-cutting tool, and the production cost is reduced.

By using the equipment, the links of die-cutting tool production and debugging machines are omitted, the generation of waste products is reduced, the energy is saved, and the environmental protection is facilitated; and the equipment has high automation degree, simple operation, quick stencil change and good use effect, and is suitable for the production requirement of small batch.

### BRIEF DESCRIPTION OF THE DRAWINGS

Fig.1 is a main view of the die-cutting machine in the first embodiment of the present invention.
Fig.2 is a main view of the connection of the mounting base and the X-axis moving assembly in the first embodiment of the present invention.
Fig.3 is a main view of the X-axis moving assembly in the first embodiment of the present invention.
Fig.4 is a top view of the X-axis moving assembly in the first embodiment of the present invention.
Fig.5 is a right side view of the Z-axis moving assembly in the first embodiment of the present invention.
Fig.6 is a main view of the Z-axis moving assembly and the lettering assembly in the first embodiment of the present invention.
Fig.7 is a right side view of the lettering assembly in the first embodiment of the present invention.
Fig.8 is a main view of the deviation rectifying assembly in the first embodiment of the present invention.
Fig.9 is a left side view of the deviation rectifying assembly in the first embodiment of the present invention.
Fig.10 is a main view of the connection of the paper pulling assembly and the main paper pulling roller on the left side of the working platform in the first embodiment of the present invention.
Fig.11 is a left side view of the connection of the paper pulling assembly and the main paper pulling roller located on the left side of the working platform in the first embodiment of the present invention.
Fig.12 is a main view of the paper feeding mechanism located on the left side of the working platform in the first embodiment of the present invention.
Fig.13 is a left side view of the paper feeding mechanism located on the left side of the working platform in the first embodiment of the present invention.
Fig.14 is a main view of the die-cutting machine in the second embodiment of the present invention.
Fig.15 is a main view of the connection of the mounting base and the X-axis moving assembly in the second embodiment of the present invention.
Fig.16 is a main view of the sliding assembly in the second embodiment of the present invention.
Fig.17 is a right side view of the X-axis moving assembly in the second embodiment of the present invention.
Fig.18 is a top view of the X-axis moving assembly in the second embodiment of the present invention.
Fig.19 is a right side view of the Z-axis moving assembly in the second embodiment of the present invention.
Fig.20 is a main view of the Z-axis moving assembly and the lettering assembly in the second embodiment of the present invention.
Fig.21 is a right side view of the lettering assembly in the second embodiment of the present invention.
Fig.22 is a main view of the deviation rectifying assembly in the second embodiment of the present invention.
Fig.23 is a left side view of the deviation rectifying assembly in the second embodiment of the present invention.
Fig.24 is a main view of the connection of the paper pulling assembly and the main pulling roller located on the left side of the work platform in the second embodiment of the present invention.
Fig.25 is a left side view of the connection of the paper pulling assembly and the main pulling roller located on the left side of the work platform in the second embodiment of the present invention.
Fig.26 is a main view of the paper feeding mechanism located on the left side of the working platform in the second embodiment of the present invention.
Fig.27 is a left side view of the paper feeding mechanism located on the left side of the working platform in the second embodiment of the present invention.
Fig.28 is a main view of the tension bellows used to replace the paper feeding mechanism in the first and second embodiments in the present invention.
Fig.29 is a left side view of the tension bellows used to replace the paper feeding mechanism in the first and second embodiments in the present invention.

### DETAILED DESCRIPTION OF THE INVENTION

In order to make the objects, technical solutions and advantages of the present invention more apparent, the present invention will be described in further detail below with reference to the accompanying drawings and embodiments. It should be understood that the specific embodiments described herein are only used to explain the present invention and are not used to limit the present invention.

A die-cutting machine achieved by the present invention, which comprises a conveying mechanism, a rewinding mechanism and a machine base, wherein the machine base is provided with a working platform, and the conveying mechanism and the rewinding mechanism are respectively arranged on the left side and the right side of the working platform, is characterized in that the die-cutting machine further comprise a lettering mechanism, the working platform is provided with at least one lettering mechanism and a mounting base, and each lettering mechanism is arranged on the working platform through a corresponding mounting base, wherein the conveying mechanism, the lettering mechanism and the rewinding mechanism are all electrically connected with a control system of the die-cutting machine; each lettering mechanism comprises a lettering assembly, an X-axis moving assembly and a Z-axis moving assembly, wherein the lettering assembly is fixedly arranged on the Z-axis moving assembly, the lettering assembly slides up and down on the Z-axis moving assembly, the Z-axis moving assembly is fixedly arranged on the X-axis moving assembly, and the Z-axis moving assembly and the lettering assembly slide on the X-axis moving assembly synchronously.

In the present application, in the horizontal plane, the direction perpendicular to the conveying direction of the material part is the X-axis direction, and the conveying direction of the material part is the Y-axis direction, and the vertical direction is the Z-axis direction. The pattern files required to be produced are introduced into the control system, the control system controls the conveying mechanism to convey the material part to the lettering mechanism, wherein the conveying mechanism can realize the forward and backward movement of the material part, thereby controlling the movement of the material part in the Y-axis direction, which is matched with the movement of the lettering assembly in the X-axis and Z-axis directions, the X-axis moving assembly controls the Z-axis moving assembly and the lettering assembly to slide in the X-axis direction, the Z-axis moving assembly controls the lettering assembly to ascend and descend in the Z-axis direction, thereby controlling the lettering depth of the material part by the lettering assembly and further controlling the lettering assembly to engrave various patterns of the material part, and the rewinding mechanism receives and discharges the processed material part to meet the production requirement; meanwhile, the feeding direction of the existing conveying mechanism is used as a movement control direction of the lettering assembly, so that the mechanism of the existing die-cutting machine can be fully utilized, the mechanism setting is simplified, and the manufacturing cost is reduced.

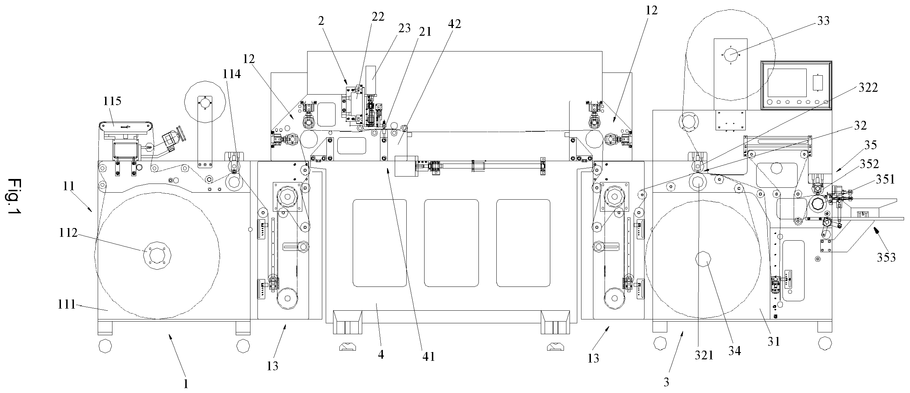

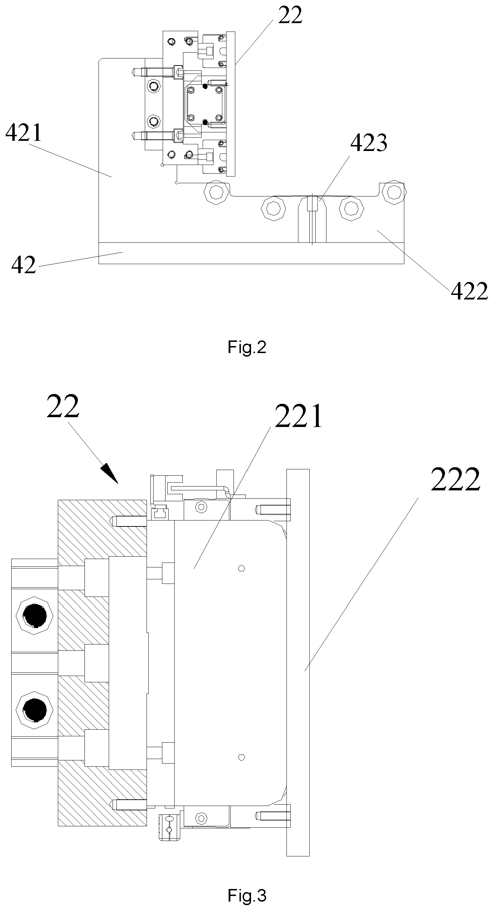

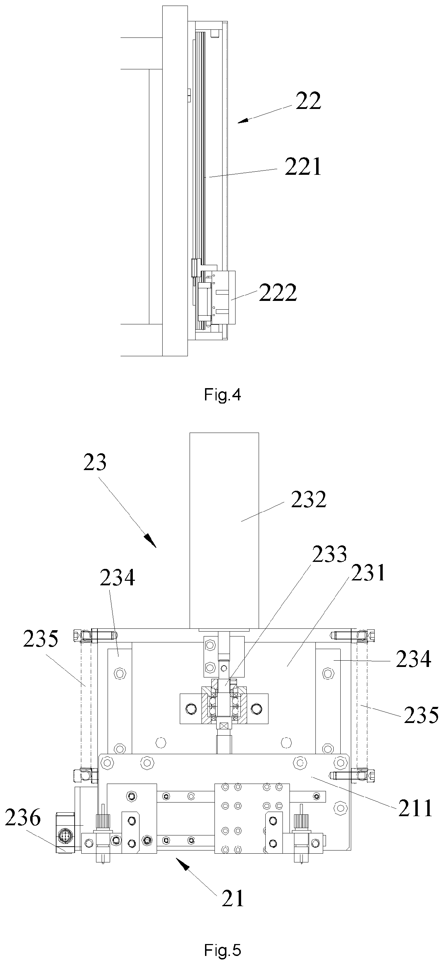

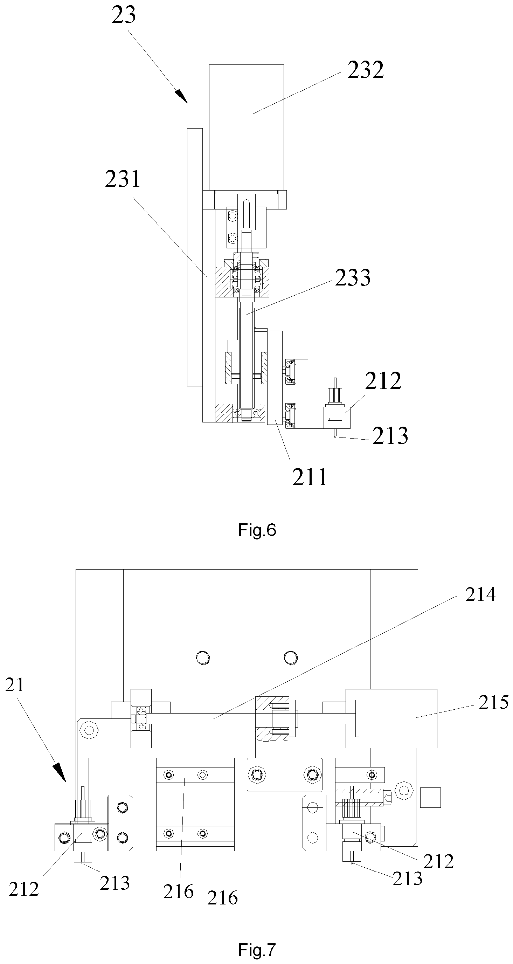

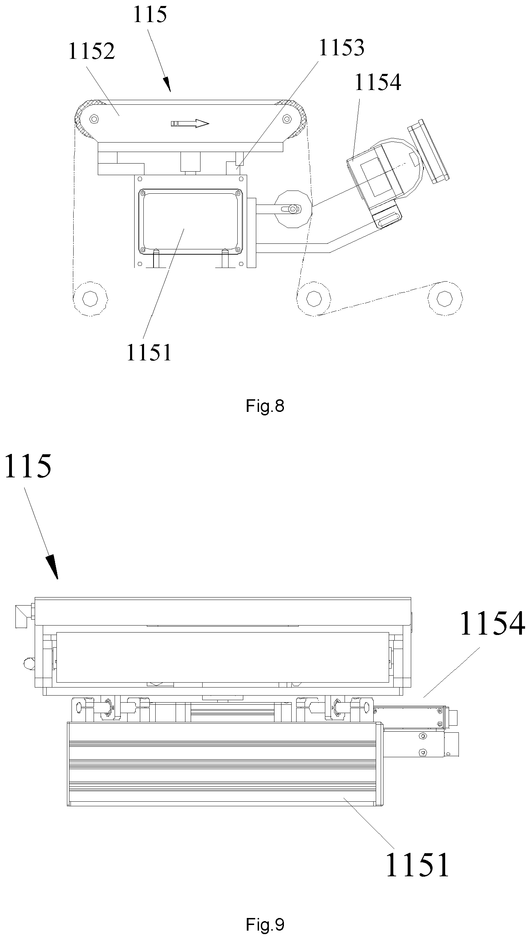

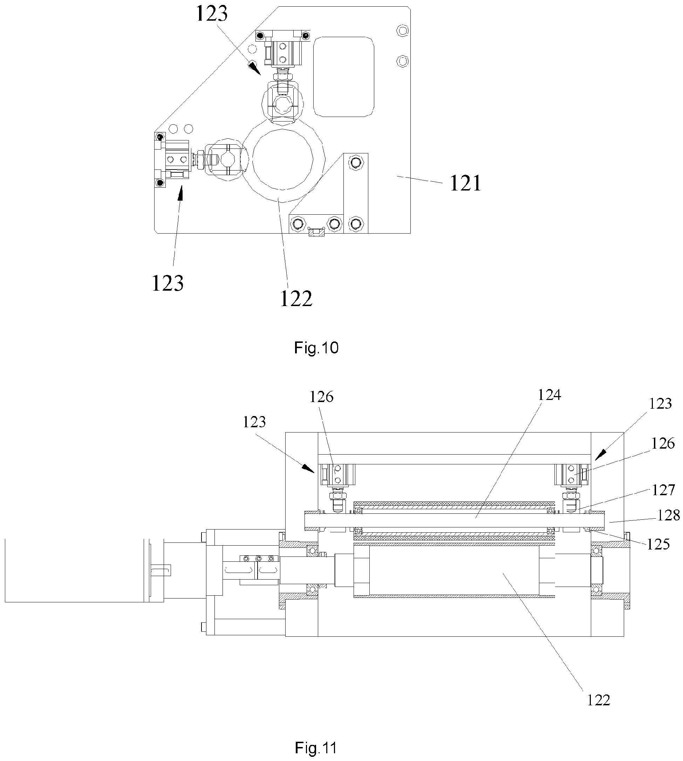

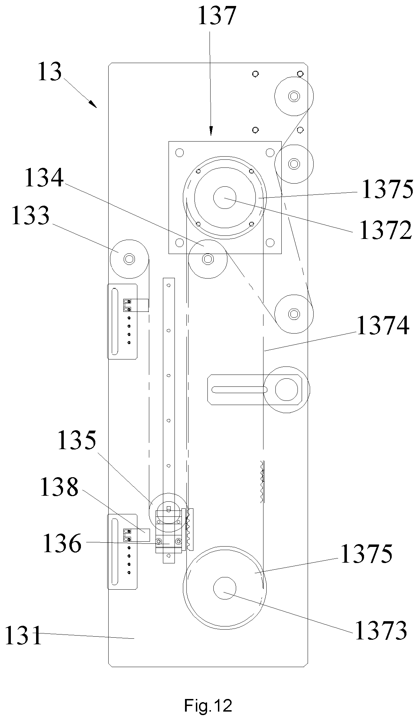

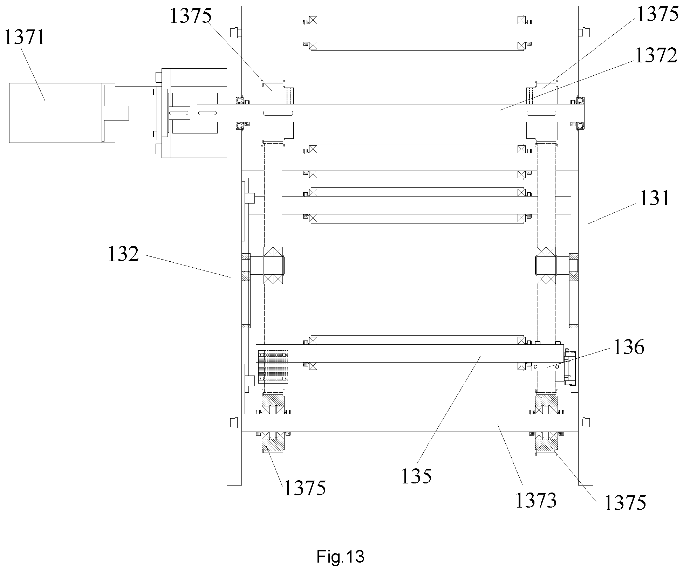

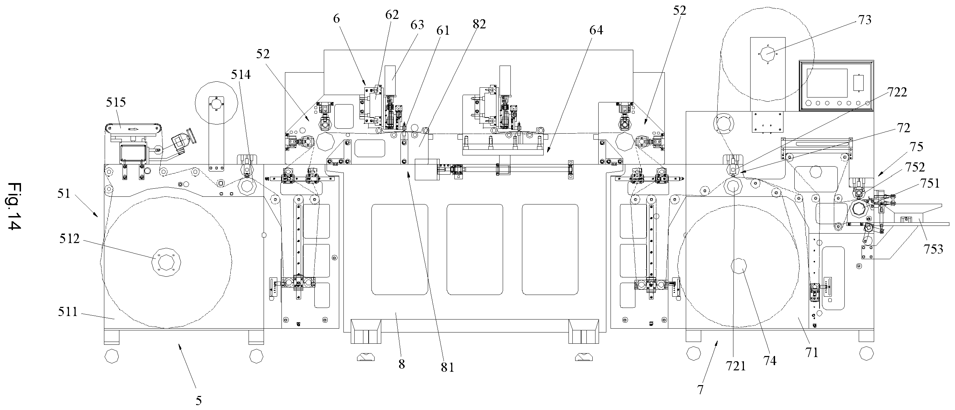

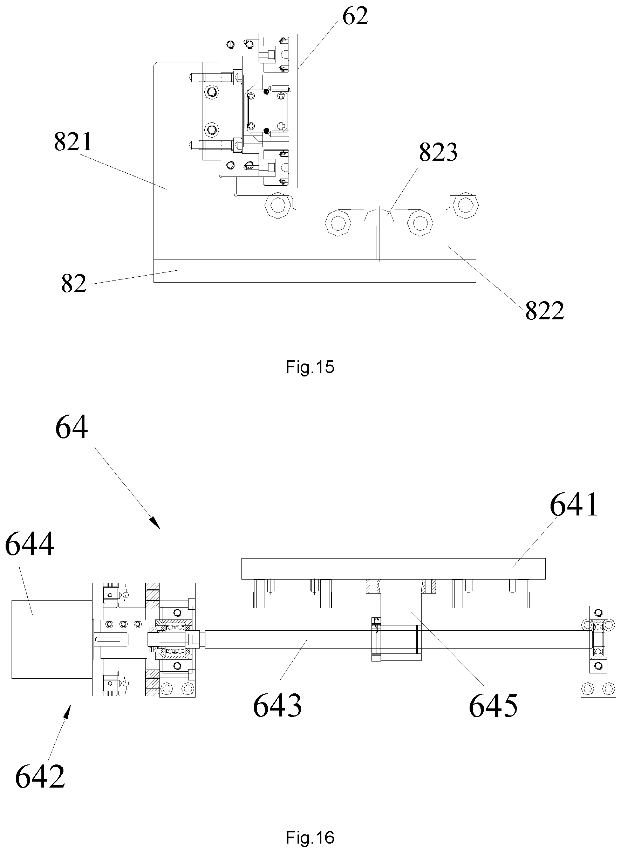

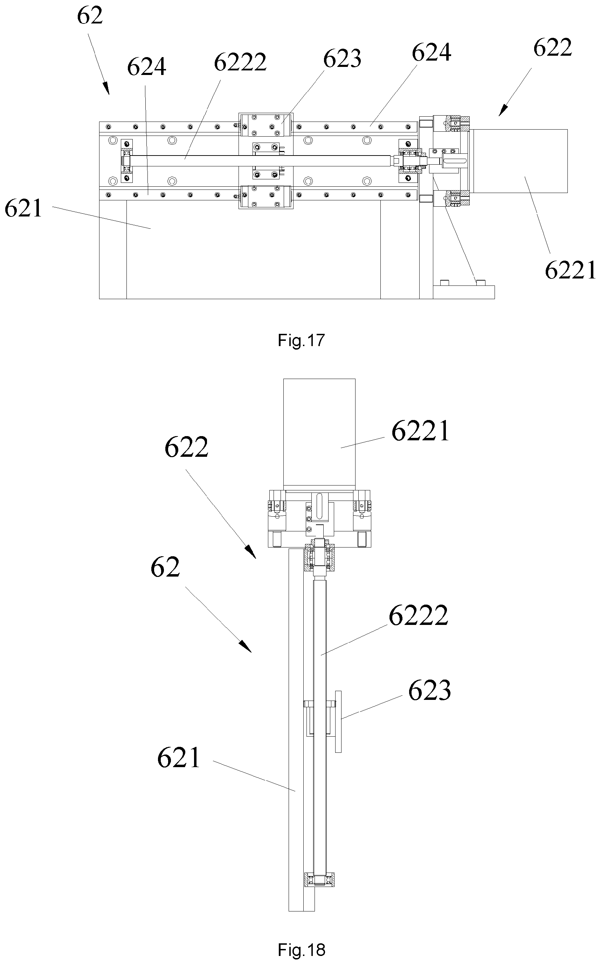

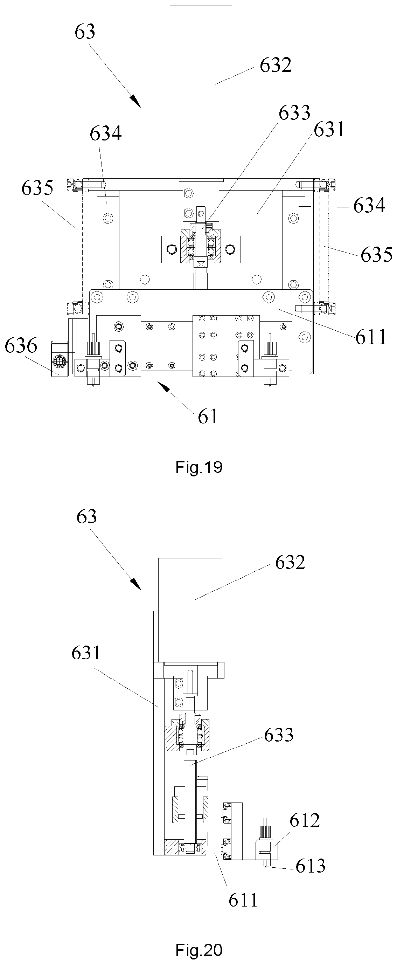

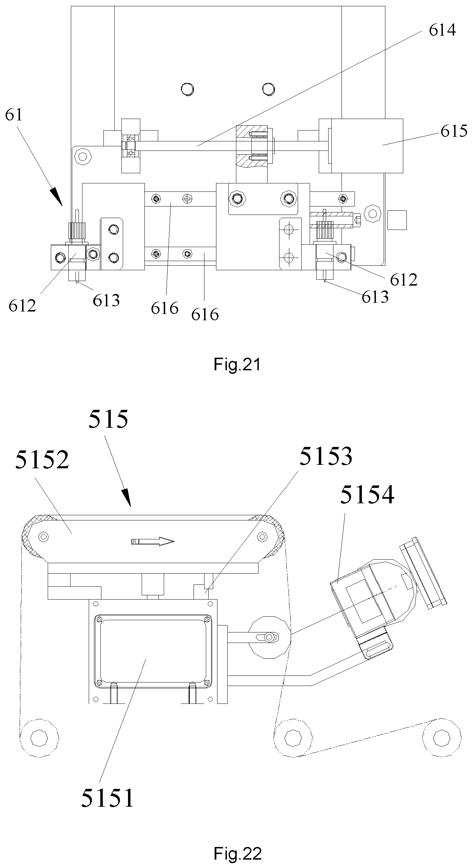

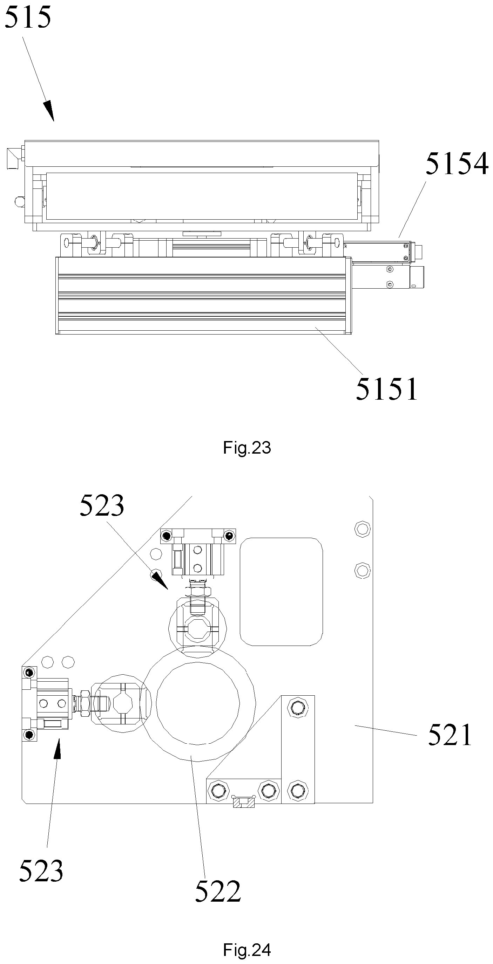

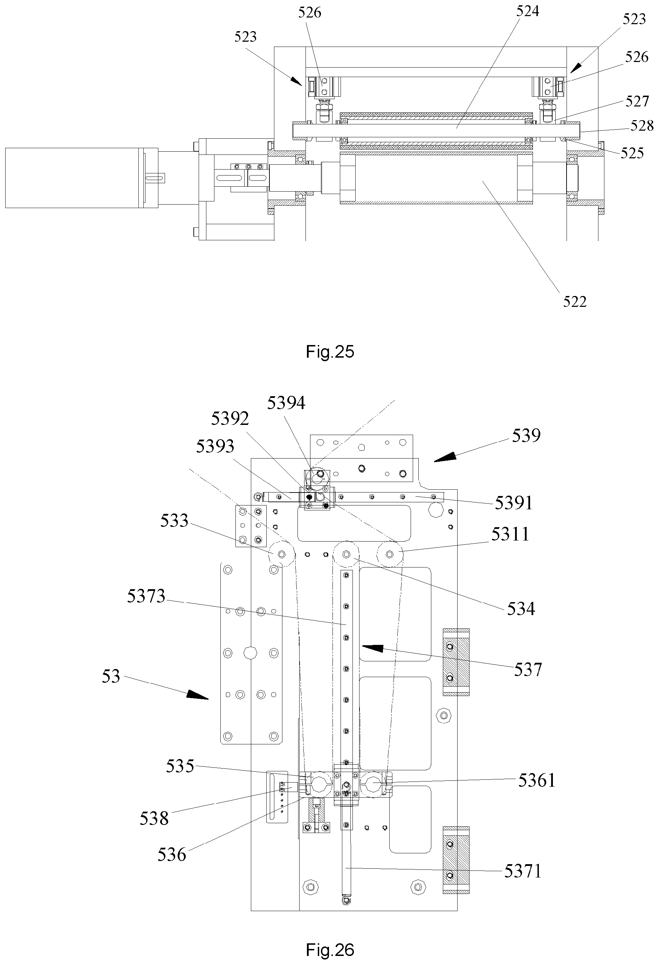

The specific implementation process comprises a plurality of embodiments, wherein Figs. 1-13 show the first embodiment, Figs. 14-27 show the second embodiment; in the first embodiment, only one lettering mechanism is fixedly provided on the working platform, and the paper feeding mechanism is of a swing roller type structure; in the second embodiment, two lettering mechanisms are provided on the working platform, wherein one lettering mechanism is fixed on the working platform, and the other lettering mechanism is movably provided on the working platform, and the paper feeding mechanism is of a double spring buffer structure. The method is specifically realized as follows:
First embodiment: referring to Figs. 1-13.

A die-cutting machine, which comprises a conveying mechanism 1, a rewinding mechanism 3 and a machine base 4, wherein the machine base is provided with a working platform 41, and the conveying mechanism 1 and the rewinding mechanism 3 are respectively arranged on the left side and the right side of the working platform 41, is characterized in that the die-cutting machine further comprise a lettering mechanism 2 which is arranged on the working platform 41 through a mounting base 42 corresponding to the lettering mechanism 2, wherein the conveying mechanism 1, the lettering mechanism 2 and the rewinding mechanism 3 are all electrically connected with a control system (not shown) of the die-cutting machine; the lettering mechanism 2 comprises a lettering assembly 21, an X-axis moving assembly 22 and a Z-axis moving assembly 23, wherein the lettering assembly 21 is arranged on the Z-axis moving assembly 23, the lettering assembly 21 slides up and down on the Z-axis moving assembly 23, the Z-axis moving assembly 23 is fixedly arranged on the X-axis moving assembly 22, and the Z-axis moving assembly 23 and the lettering assembly 21 slide together on the X-axis moving assembly 22.

In the present application document, in the horizontal plane, the direction perpendicular to the conveying direction of the material part is the X-axis direction, and the conveying direction of the material part is the Y-axis direction, and the vertical direction is the Z-axis direction. The pattern files required to be produced are introduced into the control system, the control system controls the conveying mechanism 1 to convey the material part to the lettering mechanism 2, wherein the conveying mechanism 1 can realize the forward and backward movement of the material part, thereby controlling the movement of the material part in the Y-axis direction, which is matched with the movement of the lettering assembly 21 in the X-axis and Z-axis directions, the X-axis moving assembly 22 controls the Z-axis moving assembly 23 and the lettering assembly 21 to slide in the X-axis direction, the Z-axis moving assembly 23 controls the lettering assembly 21 to ascend and descend in the Z-axis direction, thereby controlling the lettering depth of the material part by the lettering assembly 21 and further controlling the lettering assembly 21 to engrave various patterns of the material part, and the rewinding mechanism 3 receives and discharges the processed material part to meet the production requirement; meanwhile, the feeding direction of the existing conveying mechanism is used as a movement control direction of the lettering assembly, so that the mechanism of the existing die-cutting machine can be fully utilized, the mechanism setting is simplified, and the manufacturing cost is reduced.

In the present embodiment, the mounting base 42 and the X-axis moving assembly 22 are fixedly connected, the mounting base 42 is provided with a channel for conveying the material part, and the mounting base 42 includes a first mounting portion 421 and a second mounting portion 422, wherein the first mounting portion 421 is connected to the second mounting portion 422 at a certain angle to form an L-shaped structure, and a tool bit base 423 adapted to the lettering assembly 21 is provided on the second mounting portion 422.

In the present embodiment, the number of the lettering mechanism 2 is set to be one, and the lettering mechanism 2 is fixedly provided on the working platform 41 through the corresponding mounting base 42.

In this embodiment, the X-axis moving assembly 22 is a linear motor which includes a motor body 221 and a mover seat 222 sliding on the motor body, and the mover seat 222 is fixedly connected to the Z-axis moving assembly 23. The linear motor is a prior art, preferably, the linear motor uses an absolute value encoder, which utilizes the characteristic of the absolute value encoder, namely the absolute value encoder determines encoding according to a mechanical position, so that the anti-interference characteristic and the data reliability of the absolute value encoder are greatly improved.

In the present embodiment, the Z-axis moving assembly 23 includes a second base 231, a third motor 232 and a third screw rod 233, wherein the third motor 232 and the third screw rod 233 are both arranged on the second base 231, the second base 231 is provided with a second sliding rail 234, the third screw rod 233 and the second sliding rail 234 are arranged in parallel in the vertical direction, the third screw rod 233 is connected with the third motor 232, the second base 231 is fixedly connected with the X-axis moving assembly 22, and the third screw rod 233 and the second sliding rail 234 are both slidably connected with the lettering assembly 21. Preferably, the third motor 232 also adopts an absolute value encoder in the prior art, the third screw rod 233 is driven to rotate by the third motor 232, and the third screw rod 233 rotates to drive the lettering assembly 21 to move up and down along the second sliding rail 234 in the Z-axis direction.

In the present embodiment, the second base 231 is provided with a plurality of lifting buffer springs 235, one end of each lifting buffer spring 235 is fixedly connected to the second base 231, and the other end of each lifting buffer spring 235 is fixedly connected to the lettering assembly 21. In the up-and-down lifting process of the lettering assembly 21, the setting of the lifting buffer spring 235 can play a role in buffer, so that the speed of the lettering assembly 21 in ascending and descending is prevented from being too fast, the load of the third motor 232 is reduced, and the lifting buffer spring can help to support a part of weight when the lettering assembly moves.

In the present embodiment, the second base 231 is further provided with a color mark sensor 236, and the color mark sensor 236 is electrically connected to the control system. The color mark sensor 236 is a prior art, and is used for searching for pattern MARK points on the edge of the material part, and transmitting the signal to the control system for processing, so that the control system can control the lettering assembly 21 to carry out lettering operation on the material part.

In the present embodiment, the lettering assembly 21 includes a third base 211 and one or more tool aprons 212, wherein the third base 211 is slidably connected to the Z-axis moving assembly 23, the tool apron 212 is arranged on the third base 211, and the tool apron 212 is provided with cutting tool 213 which is corresponding to the tool bit base 423 on the mounting base 42.

In the present embodiment, the third base 211 is provided with a third sliding rail 216 which is horizontally arranged along the X-axis direction, when the third base 211 is provided with two or more tool aprons 212, at least one tool apron 212 is arranged on the third sliding rail 216, and each tool apron 212 arranged on the third sliding rail 216 is connected to a fourth screw rod 214 and a fourth motor 215 which correspond to the tool apron. When the third base 211 is provided with two or more tool aprons 212, the tool aprons 212 arranged on the third sliding rail 216 are all connected to the fourth screw rod 214 and the fourth motor 215 which correspond to the tool aprons, so that the fourth motor 215 drives the tool aprons 212 to slide in the horizontal direction along the fourth screw rod 214 and the third sliding rail 216, and the distance between the multiple tool aprons 212 can be adjusted to adapt to the lettering pattern of the material part, meanwhile, the processing efficiency of the lettering assembly 21 is further improved.

In the present embodiment, the conveying mechanism 1 includes a paper feeding assembly 11 and paper pulling assemblies 12, the paper feeding assembly 11 is arranged on the left side of the working platform 41, both ends of the working platform 41 are provided with the paper pulling assembly 12, the paper feeding assembly 11 conveys the material part to the paper pulling assemblies 12 after unwinding the material part, the paper pulling assemblies 12 convey the material part to the working platform 41 and convey the lettered material part to the rewinding mechanism 3. When the lettering mechanism 2 is arranged on the working platform 41, the paper pulling assemblies 12 at the two ends of the working platform 41 can be utilized to simultaneously rotate forwards and backwards to realize the forward and backward movement of the material part, namely the movement of the material part in the Y-axis direction of the lettering position.

In the present embodiment, the paper feeding assembly 11 includes a paper feeding base 111, a material feeding shaft 112 and a paper pulling roller 114, wherein the material feeding shaft 112 and the paper pulling roller 114 are both arranged on the paper feeding base 111, and the material feeding shaft 112 and the paper pulling roller 114 are sequentially arranged to form a paper feeding path through which the material part passes.

In the present embodiment, the paper feeding base 111 is further provided with a deviation rectifying assembly 115 which is arranged between the material feeding shaft 112 and the paper pulling roller 114, and the deviation rectifying assembly 115 includes a deviation rectifying base 1151, a paper guiding frame 1152, a deviation rectifying motor 1153 and a deviation electric eye 1154, wherein the deviation rectifying base 1151 is fixed on the paper feeding base 111, the deviation rectifying motor 1153 and the deviation electric eye 1154 are both fixed on the deviation rectifying base 1151, the paper guiding frame 1152 is connected with the deviation rectifying motor 1153, the deviation electric eye 1154 senses the deviation signal of the material part, and the deviation electric eye 1154 and the deviation rectifying motor 1153 are both electrically connected with the control system.

In the present embodiment, the paper pulling assembly 12 includes a paper pulling side plate 121, main paper pulling rollers 122 and two paper pulling compression roller units 123, wherein the main paper pulling rollers 122 and the paper pulling compression roller units 123 are all fixed on the working platform 41 through the paper pulling side plate 121, and the paper pulling compression roller units 123 are movably connected with the main paper pulling rollers 122. The paper pulling assemblies 12 are correspondingly arranged on two sides of the working platform 41, when the material part is conveyed to the lettering position on the tool bit base 423, the lettering assembly 21 letters the conveyed material part, and the main paper pulling rollers 122 on the two sides simultaneously rotate forwards and backwards to control the material part to move left and right in the lettering position, namely, the main paper pulling rollers 122 can realize the forward and backward movement of the material part, and control the movement of the material part in the Y-axis direction, which is matched with the movement of the lettering assembly 21 in the X-axis and Z-axis directions to realize the lettering of complex patterns on the material part.

In the present embodiment, the paper pulling compression roller unit 123 includes a paper compression roller 124, paper compression sliders 125, cylinders 126 and cylinder clamping blocks 127, wherein both ends of the paper compression roller 124 are provided with the paper compression slider 125, the cylinder 126 and the cylinder clamping block 127, the paper pulling side plate 121 is provided with a supporting groove 128 adapted to the paper compression slider 125, the paper compression sliders 125 are slidably connected with the paper pulling side plate 121, the cylinders 126 are fixedly connected with the cylinder clamping blocks 127, the cylinder clamping blocks 127 are fixed at the two ends of the paper compression roller 124, and the peripheral surface of the paper compression roller 124 is tightly attached to the peripheral surface of the main paper pulling roller 122 and forms the conveying path of the material part. When the cylinders 126 drive the cylinder clamping blocks 127 to extend out, the paper compression sliders 125 are driven to slide in the supporting groove 128, and the paper compression roller 124 is further driven to push toward the main paper pulling roller 122, so that the paper compression roller 124 and the main paper pulling roller 122 are pressed tightly; when the cylinders 126 drive the cylinder clamping blocks 127 to retract, the paper compression roller 124 is separated from the main paper pulling roller 122.

In the present embodiment, the conveying mechanism 1 further includes a paper feeding mechanism 13 for tensioning the material part, the paper feeding mechanism 13 is electrically connected to the control system, and includes a front side plate 131, a rear side plate 132, a first paper guiding roller 133, a second paper guiding roller 134, a third paper guiding roller 135, first buffer sliding bases 136 and a buffer driving assembly 137, wherein the first buffer sliding bases 136 are connected to the buffer driving assembly 137, the first paper guiding roller 133 and the second paper guiding roller 134 are both fixed on the upper portions of the front side plate 131 and the rear side plate 132, both the lower portion of the front side plate 131 and the lower portion of the rear side plate 132 are provided with the first buffer sliding base 136, the two ends of the third paper guiding roller 135 are respectively slidably connected to the front side plate 131 and the rear side plate 132 through the first buffer sliding bases 136, and the first paper guiding roller 133, the third paper guiding roller 135 and the second paper guiding roller 134 sequentially form a conveying channel of the material path. Preferably, the paper feeding mechanism 13 is arranged between the paper feeding assembly 11 and the paper pulling assembly 12 and/or between the paper pulling assembly 12 and the rewinding mechanism 3, and the buffer driving assembly 137 controls the first buffer sliding bases 136 to slide up and down along the front side plate 131 and the rear side plate 132 to drive the third paper guiding roller 135 to move up and down, the first buffer sliding base 136 and the third paper guiding roller 135 move up along with the consumption of the material part, and the first buffer slide 136 and the third paper guiding roller 135 move down along with the supplement of the material part, and the material part passing through the third paper guiding roller 135 is in a tensioned state by the up and down movement of the third paper guiding roller 135.

In the present embodiment, the front side plate 131 and the rear side plate 132 are fixedly provided with at least one position sensor 138 for sensing the positions of the first buffer sliding bases 136, and the position sensors 138 are electrically connected to the control system. The position sensors 138 are known in the art and may be linear displacement sensors or other sensors. Preferably, each first buffer sliding base 136 is provided with a vertical sensing piece which is adapted to one position sensor 138, so that the sensing piece on each first buffer sliding base 136 can be ascended or descended within the sensing range of the position sensor 138, which is beneficial to controlling the conveying speed of the material part, and effectively prevents the material part from being damaged due to the excessive descending or ascending of the first buffer sliding bases 136.

In the present embodiment, the buffer driving assembly 137 includes a buffer motor 1371, a first transmission shaft 1372, a second transmission shaft 1373, a synchronizing belt 1374 and synchronizing wheels 1375, wherein both ends of the first transmission shaft 1372 and both ends of the second transmission shaft 1373 are provided with the synchronizing wheels 1375, the buffer motor 371 is connected with the first transmission shaft 1372, the two ends of the first transmission shaft 1372 are respectively fixed in the upper portion of the front side plate 131 and the upper portion of the rear side plate 132, the two ends of the second transmission shaft are respectively fixed in the lower portion of the front side plate and the lower portion of the rear side plate, the synchronizing wheel 1375 of the first transmission shaft 1372 and the synchronizing wheel 1375 of the second transmission shaft 1373 on the same side are connected through the synchronizing belt 1374, and the first buffer sliding bases 136 are fixedly connected with the synchronizing belt 1374. The buffer motor 1371 drives the first transmission shaft 1372 to rotate forward and backward, and the synchronizing belt 1374 rotates to drive the first buffer sliding base 136 to ascend or descend, so as to drive the third paper guiding roller 135 to ascend or descend, thereby performing a paper feeding operation.

In the present embodiment, the rewinding mechanism 3 includes a rewinding base 31, a stripping assembly 32, a waste collecting shaft 33, and a material collecting shaft 34, wherein the stripping assembly 32, the waste collecting shaft 33, and the material collecting shaft 34 are all arranged on the rewinding base 31, the stripping assembly 32 includes a first stripping roller 321 and a second stripping roller 322, the second stripping roller 322 is arranged above the first stripping roller 321, the peripheral surface of the second stripping roller 322 is tightly attached to the peripheral surface of the first stripping roller 321, and the finished product is wound on the material collecting shaft 34 and the waste product is wound on the waste collecting shaft 33 after the material part passing through the stripping assembly 32. The processed material part is separated into a product and a waste product through the stripping assembly 32, and the product and the waste product are automatically respectively would up and cleaned up by using the setting of the material collecting shaft 34 and the waste collecting shaft 33, so that the lettering processing efficiency is improved.

In the present embodiment, the rewinding base is provided with a paper cutting traction assembly 35 which is arranged on the right side of the rewinding base 31, wherein the paper cutting traction assembly 35 comprises a traction roller 351, a traction roller compression roller 352 and a paper cutting assembly 353, the peripheral surface of the traction roller 351 is tightly attached to the peripheral surface of the traction roller compression roller 352, and a material part conveying path is formed between the traction roller 351 and the traction roller compression roller 352 and used for conveying the material part into the paper cutting assembly 353. Specifically, the paper cutting assembly 353 is a prior art paper cutter, and the paper cutting operation can be achieved by pulling the material part into the paper cutter by the traction roller 351. When the material part after lettering does not need to be transversely cut off, the finished product and the waste product of the material part can be collected in a rewinding way by utilizing the material collecting shaft 34 and the waste collecting shaft 33; when the material part after lettering needs to be transversely cut off, the combination of the waste collecting shaft 33 and the traction roller 351 can be utilized to pull the finished product part into the paper cutting assembly 353, namely the transverse cutting of the finished product is finished.

Second embodiment: referring to Figs. 14-27.

A die-cutting machine, which comprises a conveying mechanism 5, a rewinding mechanism 7 and a machine base 8, wherein the machine base is provided with a working platform 81, and the conveying mechanism 5 and the rewinding mechanism 7 are respectively arranged on the left side and the right side of the working platform 81, is characterized in that the die-cutting machine further comprises a lettering mechanism 6 which is arranged on the working platform 81, the lettering mechanism 6 is arranged on the working platform 81 through a corresponding mounting base 82, and the conveying mechanism 5, the lettering mechanism 6 and the rewinding mechanism 7 are all electrically connected with a control system (not shown); the lettering mechanism 6 comprises a lettering assembly 61, an X-axis moving assembly 62 and a Z-axis moving assembly 63, wherein the lettering assembly 61 is fixedly arranged on the Z-axis moving assembly 63, the lettering assembly 61 slides up and down on the Z-axis moving assembly 63, the Z-axis moving assembly 63 is fixedly arranged on the X-axis moving assembly 62, and the Z-axis moving assembly 63 and the lettering assembly 61 synchronously slide on the X-axis moving assembly 62.

In the present application document, in the horizontal plane, the direction perpendicular to the conveying direction of the material part is the X-axis direction, and the conveying direction of the material part is the Y-axis direction, and the vertical direction is the Z-axis direction. The pattern files required to be produced are introduced into the control system, the control system controls the conveying mechanism 5 to convey the material part to the lettering mechanism 6, wherein the conveying mechanism 5 can realize the forward and backward movement of the material part, thereby controlling the movement of the material part in the Y-axis direction, which is matched with the movement of the lettering assembly 61 in the X-axis and Z-axis directions, the X-axis moving assembly 62 controls the Z-axis moving assembly 63 and the lettering assembly 61 to slide in the X-axis direction, the Z-axis moving assembly 63 controls the lettering assembly 61 to ascend and descend in the Z-axis direction, thereby controlling the lettering depth of the material part by the lettering assembly 61 and further controlling the lettering assembly 61 to engrave various patterns of the material part, and the rewinding mechanism 7 receives and discharges the processed material part to meet the production requirement; meanwhile, the feeding direction of the existing conveying mechanism is used as a movement control direction of the lettering assembly, so that the mechanism of the existing die-cutting machine can be fully utilized, the mechanism setting is simplified, and the manufacturing cost is reduced.

In the present embodiment, the mounting base 82 and the X-axis moving assembly 62 are fixedly connected, the mounting base 82 is provided with a channel for conveying the material part, and the mounting base 82 includes a first mounting portion 821 and a second mounting portion 822, wherein the first mounting portion 821 is connected to the second mounting portion 822 at a certain angle to form anL-shaped structure, and a tool bit base 823 adapted to the lettering assembly 21 is provided on the second mounting portion 822.

In the present embodiment, the number of the lettering mechanism 6 is set to be two or more, wherein at least one lettering mechanism 6 is fixed on the working platform 81, at least one lettering mechanism 6 is slidably connected with the working platform 81 through a sliding assembly 64, and each lettering mechanism is arranged side by side in the Y-axis direction. When the number of the lettering mechanisms 6 is two or more, each lettering mechanism 6 indirectly processes the material part, the material part where the former lettering mechanism 6 does not process is processed by the latter lettering mechanism 6, and the plurality of lettering mechanisms 6 cooperate with each other, so that lettering can be completed on the whole coil material part, and the lettering efficiency can be further improved.

In the present embodiment, the sliding assembly 64 is fixedly arranged on the working platform 81, the sliding assembly 64 is electrically connected to the control system, the sliding assembly 64 includes a sliding base 641 and a first driving unit 642, the sliding base 641 is connected to the first driving unit 642, and the sliding base 641 is fixedly connected to the mounting base 82.

In the embodiment, the first driving unit 642 includes a first screw rod 643 and a first motor 644, the bottom of the sliding base 641 is provided with a nut connecting seat 645 which is sleeved on the first screw rod 643, and the first screw rod 643 is connected with the first motor 644. The control system drives the first screw rod 643 to rotate by using the first motor 644, and the first screw rod 643 drives the sliding base 641 to slide on the first screw rod 643 through the nut connecting seat 645, so as to drive the mounting base 82 and the second lettering mechanism 65 to slide on the working platform 81. In case of using the combination of the motor and the screw rod to control the movement of the sliding base 641 on the working platform 81, the structure is simple and easy to control.

In the present embodiment, the X-axis moving assembly 62 includes a first base 621, a second driving unit 622 and a first sliding plate 623, wherein the second driving unit 622 and the first sliding plate 623 are both arranged on the first base 621, the first base 621 is fixedly connected to the mounting base 82, the first base 621 is provided with a first sliding rail 624 for the first sliding plate 623 to slide, the first sliding plate 623 is fixedly connected to the Z-axis moving assembly 63, and the first sliding plate 623 is connected to the second driving unit 622. The second driving unit 622 drives the first sliding plate 623 to move along the first sliding rail 624 in the X-axis direction, and further drives the Z-axis moving assembly 63 on the first sliding plate 623 to slide in the X-axis direction.

In the present embodiment, the shortest edge of the first base 621 is vertically arranged on the mounting base 82, and the second driving unit 622 includes a second motor 6221 and a second screw rod 6222, wherein the second motor 6221 is connected to the second screw rod 6222, and the second screw rod 6222 is slidably connected to the first sliding plate 623. Preferably, the second motor 6221 uses an absolute value encoder, which is a prior art. Compared with the horizontal arrangement of the first base 621, when the first base 621 is vertically arranged, the occupied area of the first base 621 can be greatly reduced, namely the mounting area of the X-axis moving assembly 62 on the working platform 81 is reduced, thereby facilitating the arrangement of the plurality of lettering mechanisms 6 on the working platform 81, and simultaneously facilitating the decreasement of the occupied area of the die-cutting machine.

In the present embodiment, the Z-axis moving assembly 63 includes a second base 631, a third motor 632 and a third screw rod 633, wherein the third motor 632 and the third screw rod 633 are both arranged on the second base 631, the second base 631 is provided with a second sliding rail 634, the third screw rod 633 and the second sliding rail 634 are arranged in parallel in a vertical direction, the third screw rod 633 and the third motor 632 are connected, the second base 631 is fixedly connected to the X-axis moving assembly 62, and the third screw rod 633 and the second sliding rail 634 are both slidably connected to the lettering assembly 61. Preferably, the third motor 632 also employs an absolute value encoder in the prior art, the third motor 632 drives the third screw rod 633 to rotate, and the third screw rod 633 rotates to drive the lettering assembly 61 to move up and down along the second sliding rail 634 in the Z-axis direction.

In the present embodiment, the second base 631 is provided with a plurality of lifting buffer springs 635, one end of each lifting buffer spring 635 is fixedly connected to the second base 631, and the other end of each lifting buffer spring 635 is fixedly connected to the lettering assembly 61. During the up-and-down lifting process of the lettering assembly 61, the setting of the lifting buffer spring 635 can play a role in buffer, so that the speed of the lettering assembly 61 in ascending and descending is prevented from being too fast.

In the present embodiment, the second base 631 is further provided with a color mark sensor 636, and the color mark sensor 636 is electrically connected to the control system. The color mark sensor 636 is a prior art, and is used for searching for pattern MARK points on the edge of the material part, and transmitting the signal to the control system for processing, so that the control system can control the lettering assembly 61 to carry out lettering operation on the material part.

In the present embodiment, the lettering assembly 61 includes a third base 611 and one or more tool aprons 612, wherein the third base 611 is slidably connected to the Z-axis moving assembly 23, the tool apron 612 is arranged on the third base 611, and the tool apron 612 is provided with a cutting tool 613 which is corresponding to the tool bit base 823 on the mounting base 42.

In the present embodiment, the third base 611 is provided with a third sliding rail 616 which is horizontally arranged along the X-axis direction, when the third base 611 is provided with two or more tool aprons 612, at least one tool apron 612 is arranged on the third sliding rail 616, and each tool apron 612 arranged on the third sliding rail 616 is connected to a fourth screw rod 614 and a fourth motor 615 which correspond to the tool aprons. When the third base 611 is provided with two or more tool aprons 612, the tool aprons 612 arranged on the third sliding rail 616 are all connected to the fourth screw rod 614 and the fourth motor 615 which correspond to the tool aprons, so that the fourth motor 615 drives the tool aprons 612 to slide in the horizontal direction along the fourth screw rod 614 and the third sliding rail 616, and the distance between the multiple tool aprons 612 can be adjusted to adapt to the lettering pattern of the material part, meanwhile, the processing efficiency of the lettering assembly 61 is further improved.

In the present embodiment, the conveying mechanism 5 includes a paper feeding assembly 51 and paper pulling assemblies 52, the paperfeeding assembly 51 is arranged on the left side of the working platform 81, both ends of the working platform 81 are provided with the paper pulling assembly 52, the paper feeding assembly 51 conveys the material part to the paper pulling assemblies 52 after unwinding the material part, the paper pulling assemblies 52 convey the material part to the working platform 81 and convey the lettered material part to the rewinding mechanism 7. When the lettering mechanism 6 is arranged on the working platform 81, the paper pulling assemblies 52 at the two ends of the working platform 81 can be utilized to simultaneously rotate forwards and backwards to realize the forward and backward movement of the material part, namely the movement of the material part in the Y-axis direction of the lettering position. In the present embodiment, the paper feeding assembly 51 includes a paper feeding base 511, a material feeding shaft 512 and a paper pulling roller 514, wherein the material feeding shaft 512 and the paper pulling roller 514 are both arranged on the paper feeding base 511, and the material feeding shaft 512 and the paper pulling roller 514 are sequentially arranged to form a paper feeding path through which the material part passes.

In the present embodiment, the paper feeding base 511 is further provided with a deviation rectifying assembly 515 which is arranged between the material feeding shaft 512 and the paper pulling roller 514, and the deviation rectifying assembly 515 includes a deviation rectifying base 5151, a paper guiding frame 5152, a deviation rectifying motor 5153 and a deviation electric eye 5154, wherein the deviation rectifying base 5151 is fixed on the paper feeding base 511, the deviation rectifying motor 5153 and the deviation electric eye 5154 are both fixed on the deviation rectifying base 5151, the paper guiding frame 5152 is connected with the deviation rectifying motor 5153, the straight line where the output shaft of the deviation rectifying motor 5153 is located is perpendicular to the straight line where the axis of the paper guiding frame 5152 is located, the deviation electric eye 5154 senses the deviation signal of the material part, and the deviation electric eye 5154 and the deviation rectifying motor 5153 are both electrically connected with the control system.

In the present embodiment, the paper pulling assembly 52 includes a paper pulling side plate 521, main paper pulling rollers 522 and two paper pulling compression roller units 523, wherein the main paper pulling rollers 522 and the paper pulling compression roller units 523 are all fixed on the working platform 81 through the paper pulling side plate 521, and the paper pulling compression roller units 523 are movably connected with the main paper pulling rollers 522. The paper pulling assemblies 52 are correspondingly arranged on two sides of the working platform 81, when the material part is conveyed to the lettering position on the tool bit base 823, the lettering assembly 61 letters the conveyed material part, and the main paper pulling rollers 522 on the two sides simultaneously rotate forwards and backwards to control the material part to move left and right in the lettering position, namely, the main paper pulling rollers 522 can realize the forward and backward movement of the material part, and control the movement of the material part in the Y-axis direction, which is matched with the movement of the lettering assembly 61 in the X-axis and Z-axis directions to realize the lettering of complex patterns on the material part.

In the present embodiment, the paper pulling compression roller unit 523 includes a paper compression roller 524, paper compression sliders 525, cylinders526 and cylinder clamping blocks 527, wherein both ends of the paper compression roller 524 are provided with the paper compression slider 525, the cylinder 526 and the cylinder clamping block 527, the paper pulling side plate 521 is provided with a supporting groove 528 adapted to the paper compression slider 125, the paper compression sliders 525 are slidably connected with the paper pulling side plate 521, the cylinders 526 are fixedly connected with the cylinder clamping blocks 527, the cylinder clamping blocks 527 is fixed at the two ends of the paper compression roller 524, and the peripheral surface of the paper compression roller 524 is tightly attached to the peripheral surface of the main paper pulling roller 522 and forms the conveying path of the material part. When the cylinder 526 drive the cylinder clamping blocks 527 to extend out, the paper compression sliders 525 are driven to slide in the supporting groove 528, and the paper compression roller 524 is further driven to push toward the main paper pulling roller 522, so that the paper compression roller 524 and the main paper pulling roller 522 are pressed tightly; when the cylinders 526 drive the cylinder clamping blocks 527 to retract, the paper compression roller 524 is separated from the main paper pulling roller 522.

In the present embodiment, the conveying mechanism 5 further includes a paper feeding mechanism 53 for tensioning the material part, the paper feeding mechanism 53 is electrically connected to the control system, and includes a front side plate 531, a rear side plate 532, a first paper guiding roller 533, a second paper guiding roller 534, a third paper guiding roller 535, first buffer sliding bases 536 and a buffer driving assembly 537, wherein the first buffer sliding bases 536 are connected to the buffer driving assembly 537, the first paper guiding roller 533 and the second paper guiding roller 534 are both fixed on the upper portions of the front side plate 531 and the rear side plate 532, both the lower portion of the front side plate 531 and the lower portion of the rear side plate 532 are provided with the first buffer sliding base 536, the two ends of the third paper guiding roller 535 are respectively slidably connected to the front side plate 531 and the rear side plate 532 through the first buffer sliding bases 536, and the first paper guiding roller533, the third paper guiding roller 535 and the second paper guiding roller 534 sequentially form a conveying channel of the material path. Preferably, the paper feeding mechanism 53 is arranged between the paper feeding assembly 51 and the paper pulling assembly 52 and/or between the paper pulling assembly 52 and the rewinding mechanism 7, and the buffer driving assembly 537 controls the first buffer sliding bases 536 to slide up and down along the front side plate 531 and the rear side plate 532 to drive the third paper guiding roller 535 to move up and down, the first buffer sliding base 536 and the third paper guiding roller 535 move up along with the consumption of the material part, and the first buffer sliding base 536 and the third paper guiding roller 535 move down along with the supplement of the material part, and the material part passing through the third paper guiding roller 535 is in a tensioned state by the up and down movement of the third paper guiding roller 535.

In the present embodiment, the front side plate 531 and the rear side plate 532 are fixedly provided with at least one position sensor 538 for sensing the positions of the first buffer sliding bases 536, and the position sensors 538 are electrically connected to the control system. The position sensors 538 are known in the art and may be linear displacement sensors or other sensors. Preferably, each first buffer sliding base 536 is provided with a vertical sensing piece which is adapted to one position sensor 538, so that the sensing piece on each first buffer sliding base 536 can be ascended or descended within the sensing range of the position sensor 538, which is beneficial to controlling the conveying speed of the material part, and effectively prevents the material from being damaged due to the excessive descending or ascending of the first buffer sliding bases 536.

In the present embodiment, the buffer driving assembly 537 includes first extension springs 5371, anti-collision blocks 5372 and first linear guiding rails 5373, both the inner side of the front side plate 531 and the inner side of the rear side plate 532 are provided the first linear guiding rail 5373, the first linear guiding rails 5373 are arranged in the vertical direction, the ends of the first linear guiding rails5373 are provided the anti-collision blocks 5372, one end of each first extension spring 5371 is fixedly arranged on one first buffer sliding base 536, the other end of the first extension spring 5371 is fixedly arranged on the front side plate 531 or the rear side plate 532, and the first buffer sliding bases 536 move up and down along the first linear guiding rails 5373. By providing the first linear guiding rails 5373, the first buffer sliding bases 536 and the third paper guiding roller 535 slide up and down, the third paper guiding roller 535 is constantly subjected to the urging force of the first tension springs 5371, the material part is kept in a tensioned state, and the anti-collision blocks 5372 have anti-collision and limiting effect on the third paper guiding roller 535.

In the present embodiment, each first buffer sliding base 536 is further provided with a fourth paper guiding roller 5361 for strengthening the tension of the material part and increasing the paper feeding length, wherein the fourth paper guiding roller 5361 and the third paper guiding roller 535 are on the same horizontal line, and the upper portion of the front side plate 531 and the upper portion of the rear side plate 532 are further provided with a fifth paper guiding roller 5311, and the first paper guiding roller 533, the third paper guiding roller 535, the second paper guiding roller 534, the fourth paper guiding roller 5361 and the fifth paper guiding roller 5311 are sequentially arranged to form a paper feeding path through which the material part passes. The fourth paper guiding roller 5361 and the third paper guiding roller 535 slide synchronously, which increases the tightening operation of the material part, enhances the tightening state of the material part, and reduces the generation of defective products.

In the present embodiment, the paper feeding mechanism 53 further includes a buffer assembly 539 which is fixed on the top of the front side plate 531 and the top of the rear side plate 532, the buffer assembly 539 includes second linear guiding rails 5391, guiding rail sliders 5392, a second tension spring 5393 and a buffer paper guiding roller 5394, the front side plate 531 and the rear side plate 532 are both provided the second linear guiding rail 5391, the second linear guiding rails5391 are horizontally arranged, the two ends of the buffer paper guiding roller 5394 are both fixedly provided with the guiding rail slider 5392, each guiding rail slider 5392 is slidably connected with one second linear guiding rail 5391, one end of the second tension spring 5393 is fixedly connected with the guiding rail sliders 5392, and the other end of the second tension spring 5393 is fixedly connected with the front side plate 531 or the rear side plate. The tops of the front side plate 531 and the rear side plate 532 are provided with a buffer assembly 539, and the buffer paper guiding roller 5394 moves left and right in the horizontal direction to adjust the vertical lifting speed of the first buffer sliding base 536, thereby adjusting the material part conveying speed and the tension of the material part. Specifically, when the buffer paper guiding roller 5394 moves slowly rightward, the first buffer sliding bases 536 also move slowly upward, and when the buffer paper guiding roller 5394 moves to the rightmost end, the first buffer sliding bases 536 move up at the fastest speed; when the buffer paper guiding roller 5394 moves slowly leftward, the first buffer sliding bases 536 also move slowly downward, and when the buffer paper guiding roller 5394 moves to the leftmost end, the first buffer sliding bases 536 move down at the fastest speed.

In the present embodiment, the rewinding mechanism 7 includes a rewinding base 71, a stripping assembly 72, a waste collecting shaft 73, and a material collecting shaft 74, wherein the stripping assembly 72, the waste collecting shaft 73, and the material collecting shaft 74 are all arranged on the rewinding base 71, the stripping assembly 72 includes a first stripping roller 721 and a second stripping roller 722, the second stripping roller 722 is arranged above the first stripping roller 721, the peripheral surface of the second stripping roller 722 is tightly attached to the peripheral surface of the first stripping roller 721, and the finished product is wound on the material collecting shaft 74 and the waste product is wound on the waste collecting shaft 73 after the material part passing through the stripping assembly 72. The processed material part is separated into a product and a waste product through the stripping assembly 72, and the product and the waste product are automatically respectively would up and cleaned up by using the setting of the material collecting shaft 74 and the waste collecting shaft 7, so that the lettering processing efficiency is improved.

In the present embodiment, the rewinding base is provided with a paper cutting traction assembly 75 which is arranged on the right side of the rewinding base 71, wherein the paper cutting traction assembly 75 comprises a traction roller 751, a traction roller compression roller 752 and a paper cutting assembly 753, the peripheral surface of the traction roller 751 is tightly attached to the peripheral surface of the traction roller compression roller 752, and a material part conveying path is formed between the traction roller 751 and the traction roller compression roller 752 and used for conveying the material part into the paper cutting assembly 753. Specifically, the paper cutting assembly 753 is a prior art paper cutter, and the paper cutting operation can be achieved by pulling the material part into the paper cutter by the traction roller 751. When the material part after lettering does not need to be transversely cut off, the finished product and the waste product of the material part can be collected in a rewinding way by utilizing the material collecting shaft 74 and the waste collecting shaft 73; when the material part after lettering needs to be transversely cut off, the combination of the waste collecting shaft 73 and the traction roller 751 can be utilized to pull the finished product part into the paper cutting assembly 753, namely the transverse cutting of the finished product is finished.

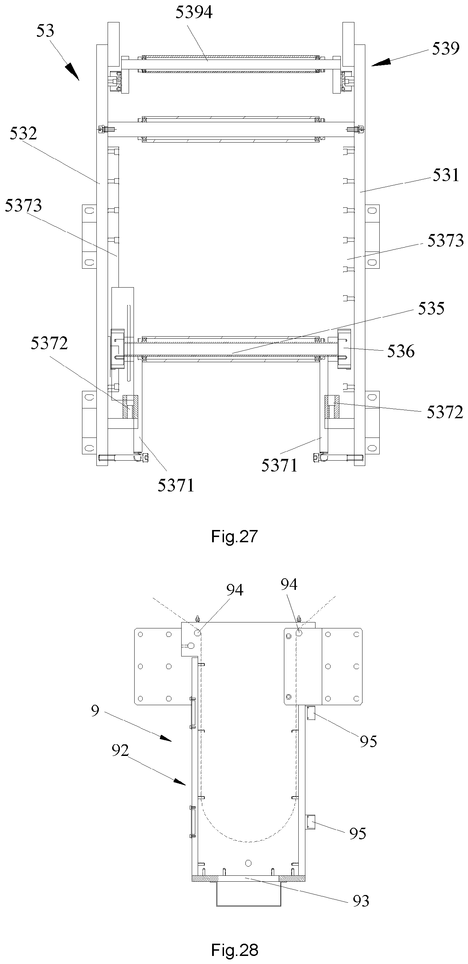

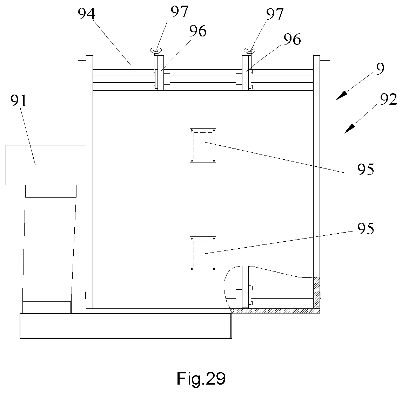

Referring to Figs. 28 and 29, in the first and second embodiments described above, the paper feeding mechanism may be replaced with a tension bellows. The tension bellows is electrically connected with the control system and is arranged between the paper feeding assembly and the paper pulling assembly or between the paper pulling assembly and the rewinding mechanism.

The tension bellows 9 includes a fan 91 and a bellows body 92, wherein the bottom of the bellows body 92 is provided with a wind gap 93, the fan 91 is communicated with the bellows body 92 through the wind gap 93, the opening of bellows body 92 faces upwards and both the left and right sides at the top are provided with a bellows paper guiding roller 94 that is used for the material part to pass into and out of the bellows body 92, and the bellows body 92 is provided with a height sensor 95 that is used for sensing to the height of the material part. When using the tension bellows 9, the material part enters the interior from one side of the bellows body 92 and then comes out from the other side, and when the material part is in the interior of the tension bellows 9, the fan 91 acts on the bellows body 92 to pump out the lower air enclosed by the material part and the bellows body 92, new air is compensated from the gap position to form air flow, and the material part can be tightened by the air flow formed by the fact that the air pressure at the upper part of the material part is larger than that at the lower part of the material part. The height sensor 95 is a prior art, and specifically, a high-position sensor and a low-position sensor can be arranged on the bellows body 92, the position of the material part is sensed through the height sensor 95, a signal is correspondingly sent to the control system, and the control system controls the feeding or discharging operation of the tension bellows.

The bellows paper guiding roller 94 on each side is sleeved with two bellows sliding plates 96, the material part passes through the bellows paper guiding roller 94 and is limited between the bellows sliding plates 96 on each side, the bellows sliding plates 96 are slidably connected with the bellows paper guiding roller 94, and each bellows sliding plate 96 is provided with corresponding fastening bolts 97. The bellows sliding plates 96 are sleeved on the bellows paper guiding rollers 94, and the distance between the bellows sliding plates 96 on each side can be adjusted by using the fastening bolts 97, so that the bellows sliding plates 96 can be fixed without sliding when in use, material part cannot be clamped and damaged, and the widths of different material part can be adapted.

The present invention has the advantages that the equipment combines the X-axis moving assembly, the Z-axis moving assembly and the lettering assembly, and the lettering assembly can move in the horizontal direction and the vertical direction, so that patterns on the material part can be engraved by the lettering cutter, the production of products with variable contents under actual conditions can be met without replacing the die-cutting tool, and the production cost is reduced.

By using the equipment, the links of die-cutting tool production and debugging machines are omitted, the generation of waste products is reduced, the energy is saved, and the environmental protection is facilitated; and the equipment has high automation degree, simple operation, quick stencil change and good use effect, and is suitable for the production requirement of small batch.

## Claims

1. A die-cutting machine, comprising a conveying mechanism (1, 5), a rewinding mechanism (3, 7) and a machine base (4, 8), wherein the machine base (4, 8) is provided with a working platform (41, 81), and the conveying mechanism (1, 5) and the rewinding mechanism (3, 7) are respectively arranged on a left side and a right side of the working platform (41, 81), **characterized in that** the die-cutting machine further comprises at least one lettering mechanism (2, 6), the working platform (41, 81) being provided with the at least one lettering mechanism (2, 6), and the at least one lettering mechanism (2, 6) is arranged on the working platform (41, 81) through a corresponding mounting base (42, 82), wherein the conveying mechanism (1, 5), the at least one lettering mechanism (2, 6) and the rewinding mechanism (3, 7) are all electrically connected with a control system of the die-cutting machine;
the at least one lettering mechanism (2, 6) comprises a lettering assembly (21, 61), an X-axis moving assembly (22, 62) and a Z-axis moving assembly (23, 63), wherein the lettering assembly (21, 61) realizes the engraving of patterns, and the lettering assembly (21, 61) is arranged on the X-axis moving assembly (22, 62) and supported by the Z-axis moving assembly (23, 63).

2. The die-cutting machine according to claim 1, **characterized in that** the lettering assembly (21, 61) is arranged on the Z-axis moving assembly (23, 63), the lettering assembly (21, 61) slides up and down on the Z-axis moving assembly (23, 63), the Z-axis moving assembly (23, 63) is arranged on the X-axis moving assembly (22, 62), and the Z-axis moving assembly (23, 63) and the lettering assembly (21, 61) slide together on the X-axis moving assembly (22, 62).

3. The die-cutting machine according to claim 1, **characterized in that** the mounting base (42, 82) and the X-axis moving assembly (22, 62) are fixedly connected, the mounting base (42, 82) is provided with a channel for conveying the material part, and the mounting base (42, 82) includes a first mounting portion (421, 821) and a second mounting portion (422, 822), wherein the first mounting portion (421, 821) is connected to the second mounting portion (422, 822) at a certain angle to form an L-shaped structure, and a tool bit base (423, 823) adapted to the lettering assembly (21, 61) is provided on the second mounting portion (422, 822).

4. The die-cutting machine according to claim 1, **characterized in that** the at least one lettering mechanism (2, 6) is set to be one lettering mechanism (2), and the lettering mechanism (2) is fixedly provided on the working platform (41, 81) through the corresponding mounting base (42), or the lettering mechanism (2) is slidably connected with the working platform (41, 81) through a sliding assembly (64).

5. The die-cutting machine according to claim 1, **characterized in that** when the at least one lettering mechanism (2, 6) is set to be two or more lettering mechanisms (6), at least one lettering mechanism (6) is fixed on the working platform (41, 81), and at least one lettering mechanism (6) is slidably connected with the working platform (41, 81) through a sliding assembly (64), and each lettering mechanism (6) is arranged side by side in the Y-axis direction.

6. The die-cutting machine according to claim 1, **characterized in that** when the at least one lettering mechanism (2, 6) is set to be two or more lettering mechanisms (6), the lettering mechanisms (6) are all movably arranged on the working platform (41, 81) through a sliding assembly (64), and each lettering mechanism (6) is arranged side by side in the Y-axis direction.

7. The die-cutting machine according to claim 1, **characterized in that** when the at least one lettering mechanism (2, 6) is set to be two or more lettering mechanisms (6), the lettering mechanisms (6) are fixedly arranged on the working platform (41, 81), and each lettering mechanism (6) is arranged side by side in the Y-axis direction.

8. The die-cutting machine according to any one of claims 4, 5 and 6, **characterized in that** the sliding assembly (64) is arranged on the working platform (41, 81), the sliding assembly (64) is electrically connected with the control system, and the sliding assembly (64) comprises a sliding base (641) and a first driving unit (642), wherein the sliding base (641) is connected with the first driving unit (642), and the sliding base (641) is fixedly connected with the mounting base (42, 82).

9. The die-cutting machine according to claim 8, **characterized in that** the first driving unit (642) comprises a first screw rod (643) and a first motor (644), the bottom of the sliding base (641) is provided with a nut connecting seat (645) which is sleeved on the first screw rod (643), and the first screw rod (643) is connected with the first motor (644).

10. The die-cutting machine according to claim 1, **characterized in that** the X-axis moving assembly (22, 62) is a linear motor which comprises a motor body (221) and a mover seat (222) sliding on the motor body (221), and the mover seat (222) is fixedly connected with the Z-axis moving assembly (23, 63).

11. The die-cutting machine according to claim 1, **characterized in that** the X-axis moving assembly (22, 62) comprises a first base (621), a second driving unit (622) and a first sliding plate (623), wherein the second driving unit (622) and the first sliding plate (623) are both arranged on the first base (621), the first base (621) is fixedly connected with the mounting base (42, 82), the first base (621) is provided with a first sliding rail (624) for the first sliding plate (623) to slide, the first sliding plate (623) is fixedly connected with the Z-axis moving assembly (23, 63), and the first sliding plate (623) is connected with the second driving unit (622).

12. The die-cutting machine according to claim 11, **characterized in that** the shortest edge of the first sliding plate (623) is vertically arranged on the mounting base (42, 82), the second driving unit (622) comprises a second motor (6221) and a second screw rod (6222), the second motor (6221) is connected with the second screw rod (6222), and the second screw rod (6222) is slidably connected with the first sliding plate (623).

13. The die-cutting machine according to claim 1, **characterized in that** the Z-axis moving assembly (23, 63) comprises a second base (231, 631), a third motor (232, 632) and a third screw rod (233, 633), wherein the third motor (232, 632) and the third screw rod (233, 633) are arranged on the second base (231, 631), the second base (231, 631) is provided with a second sliding rail (234, 634), the third screw rod (233, 633) and the second sliding rail (234, 634) are arranged in parallel in the vertical direction, the third screw rod (233, 633) and the third motor (232, 632) are connected, the second base (231, 631) is fixedly connected with the X-axis moving assembly (22, 62), and the third screw rod (233, 633) and the second sliding rail (234, 634) are slidably connected with the at least one lettering assembly (21, 61).

14. The die-cutting machine according to claim 13, **characterized in that** the second base (231, 631) is provided with a plurality of lifting buffer springs (235, 635), one end of each lifting buffer spring (235, 635) is fixedly connected with the second base (231, 631), and the other end of each lifting buffer spring (235, 635) is fixedly connected with the at least one lettering assembly (21, 61).

15. The die-cutting machine according to claim 14, **characterized in that** the second base (231, 631) is further provided with a color mark sensor (236, 636), and the color mark sensor (236, 636) is electrically connected with the control system.

16. The die-cutting machine according to claim 3, **characterized in that** the lettering assembly (21, 61) comprises a third base (211, 611) and one or more tool aprons (212, 612), wherein the third base (211, 611) is slidably connected with the Z-axis moving assembly (23, 63), the tool apron (212, 612) is arranged on the third base (211, 611), the tool apron (212, 612) is provided with a cutting tool (613) which is corresponding to the tool bit base (423, 823) on the mounting base (42, 82).

17. The die-cutting machine according to claim 16, **characterized in that** the third base (211, 611) is provided with a third sliding rail (216, 616) which is horizontally arranged along the X-axis direction, when the third base (211, 611) is provided with two or more tool aprons (212, 612), at least one tool apron (212, 612) is arranged on the third sliding rail (216, 616), and each tool apron (212, 612) arranged on the third sliding rail (216, 616) is connected with a fourth screw rod (214, 614) and a fourth motor (215, 615) which correspond to the tool apron (212, 612).

## Patentansprüche

1. Stanzmaschine, die einen Fördermechanismus (1, 5), einen Rückspulmechanismus (3, 7) und eine Maschinenbasis (4, 8) umfasst, wobei die Maschinenbasis (4, 8) mit einer Arbeitsplattform (41, 81) versehen ist und der Fördermechanismus (1, 5) und der Rückspulmechanismus (3, 7) jeweils auf einer linken Seite beziehungsweise einer rechten Seite der Arbeitsplattform (41, 81) angeordnet sind, **dadurch gekennzeichnet, dass** die Stanzmaschine ferner mindestens einen Beschriftungsmechanismus (2, 6) umfasst, wobei die Arbeitsplattform (41, 81) mit dem mindestens einen Beschriftungsmechanismus (2, 6) versehen ist und der mindestens eine Beschriftungsmechanismus (2, 6) durch eine entsprechende Montagebasis (42, 82) auf der Arbeitsplattform (41, 81) angeordnet ist, wobei der Fördermechanismus (1, 5), der mindestens eine Beschriftungsmechanismus (2, 6) und der Rückspulmechanismus (3, 7) alle elektrisch mit einer Steuerungsanlage der Stanzmaschine verbunden sind,
wobei der mindestens eine Beschriftungsmechanismus (2, 6) eine Beschriftungsbaugruppe (21, 61), eine X-Achsen-Bewegungsbaugruppe (22, 62) und eine Z-Achsen-Bewegungsbaugruppe (23, 63) umfasst, wobei die Beschriftungsbaugruppe (21, 61) das Eingravieren von Mustern verwirklicht und die Beschriftungsbaugruppe (21, 61) auf der X-Achsen-Bewegungsbaugruppe (22, 62) angeordnet ist und durch die Z-Achsen-Bewegungsbaugruppe (23, 63) gestützt wird.

2. Stanzmaschine nach Anspruch 1, **dadurch gekennzeichnet, dass** die Beschriftungsbaugruppe (21, 61) auf der Z-Achsen-Bewegungsbaugruppe (23, 63) angeordnet ist, die Beschriftungsbaugruppe (21, 61) auf der Z-Achsen-Bewegungsbaugruppe (23, 63) auf- und abgleitet, die Z-Achsen-Bewegungsbaugruppe (23, 63) auf der X-Achsen-Bewegungsbaugruppe (22, 62) angeordnet ist und die Z-Achsen-Bewegungsbaugruppe (23, 63) und die Beschriftungsbaugruppe (21, 61) zusammen auf der X-Achsen-Bewegungsbaugruppe (22, 62) gleiten.

3. Stanzmaschine nach Anspruch 1, **dadurch gekennzeichnet, dass** die Montagebasis (42, 82) und die X-Achsen-Bewegungsbaugruppe (22, 62) fest verbunden sind, die Montagebasis (42, 82) mit einem Kanal zum Befördern des Materialteils versehen ist und die Montagebasis (42, 82) einen ersten Montageabschnitt (421, 821) und einen zweiten Montageabschnitt (422, 822) einschließt, wobei der erste Montageabschnitt (421, 821) in einem bestimmten Winkel mit dem zweiten Montageabschnitt (422, 822) verbunden ist, um eine L-förmige Struktur zu bilden, und eine Werkzeugspitzenbasis (423, 823), die an die Beschriftungsbaugruppe (21, 61) angepasst ist, an dem zweiten Montageabschnitt (422, 822) bereitgestellt wird.

4. Stanzmaschine nach Anspruch 1, **dadurch gekennzeichnet, dass** der mindestens eine Beschriftungsmechanismus (2, 6) als ein Beschriftungsmechanismus (2) eingerichtet ist und der Beschriftungsmechanismus (2) durch die entsprechende Montagebasis (42) fest an der Arbeitsplattform (41, 81) befestigt ist oder der Beschriftungsmechanismus (2) durch eine Gleitbaugruppe (64) verschiebbar mit der Arbeitsplattform (41, 81) verbunden ist.

5. Stanzmaschine nach Anspruch 1, **dadurch gekennzeichnet, dass**, wenn der mindestens eine Beschriftungsmechanismus (2, 6) als zwei oder mehr Beschriftungsmechanismen (6) eingerichtet ist, mindestens ein Beschriftungsmechanismus (6) an der Arbeitsplattform (41, 81) befestigt ist und mindestens ein Beschriftungsmechanismus (6) durch eine Gleitbaugruppe (64) verschiebbar mit der Arbeitsplattform (41, 81) verbunden ist und jeder Beschriftungsmechanismus (6) nebeneinander in der Y-Achsenrichtung angeordnet ist.

6. Stanzmaschine nach Anspruch 1, **dadurch gekennzeichnet, dass**, wenn der mindestens eine Beschriftungsmechanismus (2, 6) als zwei oder mehr Beschriftungsmechanismen (6) eingerichtet ist, die Beschriftungsmechanismen (6) alle durch eine Gleitbaugruppe (64) auf der Arbeitsplattform (41, 81) angeordnet sind und jeder Beschriftungsmechanismus (6) nebeneinander in der Y-Achsenrichtung angeordnet ist.

7. Stanzmaschine nach Anspruch 1, **dadurch gekennzeichnet, dass**, wenn der mindestens eine Beschriftungsmechanismus (2, 6) als zwei oder mehr Beschriftungsmechanismen (6) eingerichtet ist, die Beschriftungsmechanismen (6) alle fest auf der Arbeitsplattform (41, 81) angeordnet sind und jeder Beschriftungsmechanismus (6) nebeneinander in der Y-Achsenrichtung angeordnet ist.

8. Stanzmaschine nach einem der Ansprüche 4, 5 und 6, **dadurch gekennzeichnet, dass** die Gleitbaugruppe (64) auf der Arbeitsplattform (41, 81) angeordnet ist, die Gleitbaugruppe (64) elektrisch mit der Steuerungsanlage verbunden ist und die Gleitbaugruppe (64) eine Gleitbasis (641) und eine erste Antriebseinheit (642) umfasst, wobei die Gleitbasis (641) mit der ersten Antriebseinheit (642) verbunden ist und die Gleitbasis (641) fest mit der Montagebasis (42, 82) verbunden ist.

9. Stanzmaschine nach Anspruch 8, **dadurch gekennzeichnet, dass** die erste Antriebseinheit (642) eine erste Schraubenspindel (643) und einen ersten Motor (644) umfasst, der Boden der Gleitbasis (641) mit einem Mutternverbindungssitz (645) versehen ist, der auf die erste Schraubenspindel (643) aufgeschoben ist, und die erste Schraubenspindel (643) mit dem ersten Motor (644) verbunden ist.

10. Stanzmaschine nach Anspruch 1, **dadurch gekennzeichnet, dass** die X-Achsen-Bewegungsbaugruppe (22, 62) ein Linearmotor ist, der ein Motorgehäuse (221) und einen Antriebssitz (222), der auf dem Motorgehäuse (221) gleitet, umfasst und der Antriebssitz (222) fest mit der Z-Achsen-Bewegungsbaugruppe (23, 63) verbunden ist.

11. Stanzmaschine nach Anspruch 1, **dadurch gekennzeichnet, dass** die X-Achsen-Bewegungsbaugruppe (22, 62) eine erste Basis (621), eine zweite Antriebseinheit (622) und eine erste Gleitplatte (623) umfasst, wobei die zweite Antriebseinheit (622) und die erste Gleitplatte (623) beide auf der ersten Basis (621) angeordnet sind, die erste Basis (621) fest mit der Montagebasis (42, 82) verbunden ist, die erste Basis (621) mit einer ersten Gleitschiene (624) versehen ist, damit die erste Gleitplatte (623) gleitet, die erste Gleitplatte (623) fest mit der Z-Achsen-Bewegungsbaugruppe (23, 63) verbunden ist und die erste Gleitplatte (623) mit der zweiten Antriebseinheit (622) verbunden ist.

12. Stanzmaschine nach Anspruch 11, **dadurch gekennzeichnet, dass** die kürzeste Kante der ersten Gleitplatte (623) vertikal an der Montagebasis (42, 82) angeordnet ist, die zweite Antriebseinheit (622) einen zweiten Motor (6221) und eine zweite Schraubenspindel (6222) umfasst, der zweite Motor (6221) mit der zweiten Schraubenspindel (6222) verbunden ist und die zweite Schraubenspindel (6222) verschiebbar mit der ersten Gleitplatte (623) verbunden ist.

13. Stanzmaschine nach Anspruch 1, **dadurch gekennzeichnet, dass** die Z-Achsen-Bewegungsbaugruppe (23, 63) eine zweite Basis (231, 631), einen dritten Motor (232, 632) und eine dritte Schraubenspindel (233, 633) umfasst, wobei der dritte Motor (232, 632) und die dritte Schraubenspindel (233, 633) auf der zweiten Basis (231, 631) angeordnet sind, die zweite Basis (231, 631) mit einer zweiten Gleitschiene (234, 634) versehen ist, die dritte Schraubenspindel (233, 633) und die zweite Gleitschiene (234, 634) parallel in der vertikalen Richtung angeordnet sind, die dritte Schraubenspindel (233, 633) und der dritte Motor (232, 632) verbunden sind, die zweite Basis (231, 631) fest mit der X-Achsen-Bewegungsbaugruppe (22, 62) verbunden ist und die dritte Schraubenspindel (233, 633) und die zweite Gleitschiene (234, 634) verschiebbar mit der mindestens einen Beschriftungsbaugruppe (21, 61) verbunden sind.

14. Stanzmaschine nach Anspruch 13, **dadurch gekennzeichnet, dass** die zweite Basis (231, 631) mit einer Vielzahl von Hubpufferfedern (235, 635) versehen ist, wobei das eine Ende jeder Hubpufferfeder (235, 635) fest mit der zweiten Basis (231, 631) verbunden ist und das andere Ende jeder Hubpufferfeder (235, 635) fest mit der mindestens einen Beschriftungsbaugruppe (21, 61) verbunden ist.

15. Stanzmaschine nach Anspruch 14, **dadurch gekennzeichnet, dass** die zweite Basis (231, 631) ferner mit einem Farbmarkierungssensor (236, 636) versehen ist und der Farbmarkierungssensor (236, 636) elektrisch mit der Steuerungsanlage verbunden ist.

16. Stanzmaschine nach Anspruch 3, **dadurch gekennzeichnet, dass** die Beschriftungsbaugruppe (21, 61) eine dritte Basis (211, 611) und ein oder mehrere Werkzeugaufnahmen (212, 612) umfasst, wobei die dritte Basis (211, 611) verschiebbar mit der Z-Achsen-Bewegungsbaugruppe (23, 63) verbunden ist, die Werkzeugaufnahme (212, 612) auf der dritten Basis (211, 611) angeordnet ist, die Werkzeugaufnahme (212, 612) mit einem Schneidwerkzeug (613) versehen ist, das der Werkzeugspitzenbasis (423, 823) auf der Montagebasis (42, 82) entspricht.

17. Stanzmaschine nach Anspruch 16, **dadurch gekennzeichnet, dass** die dritte Basis (211, 611) mit einer dritten Gleitschiene (216, 616) versehen ist, die horizontal entlang der X-Achsenrichtung angeordnet ist, wenn die dritte Basis (211, 611) mit zwei oder mehr Werkzeugaufnahmen (212, 612) versehen ist, mindestens eine Werkzeugaufnahme (212, 612) auf der dritten Gleitschiene (216, 616) angeordnet ist und jede Werkzeugaufnahme (212, 612), die auf der dritten Gleitschiene (216, 616) angeordnet ist, mit einer vierten Schraubenspindel (214, 614) und einem vierten Motor (215, 615) verbunden ist, die der Werkzeugaufnahme (212, 612) entsprechen.

## Revendications

1. Découpeuse, comprenant un mécanisme de convoyage (1, 5), un mécanisme de rembobinage (3, 7) et une base de machine (4, 8), la base de machine (4, 8) étant pourvue d'une plate-forme de travail (41, 81) et le mécanisme de convoyage (1, 5) et le mécanisme de rembobinage (3, 7) étant respectivement disposés sur un côté gauche et un côté droit de la plate-forme de travail (41, 81), **caractérisée en ce que** la découpeuse comprend en outre au moins un mécanisme de lettrage (2, 6), la plate-forme de travail (41, 81) étant pourvue de l'au moins un mécanisme de lettrage (2, 6) et l'au moins un mécanisme de lettrage (2, 6) étant disposé sur la plate-forme de travail (41, 81) par l'intermédiaire d'une base de montage correspondante (42, 82), le mécanisme de convoyage (1, 5), l'au moins un mécanisme de lettrage (2, 6) et le mécanisme de rembobinage (3, 7) étant tous connectés électriquement à un système de commande de la découpeuse ;
l'au moins un mécanisme de lettrage (2, 6) comprenant un ensemble de lettrage (21, 61), un ensemble se déplaçant dans l'axe X (22, 62) et un ensemble se déplaçant dans l'axe Z (23, 63), l'ensemble de lettrage (21, 61) réalisant la gravure de motifs, et l'ensemble de lettrage (21, 61) étant disposé sur l'ensemble se déplaçant dans l'axe X (22, 62) et supporté par l'ensemble se déplaçant dans l'axe Z (23, 63).

2. Découpeuse selon la revendication 1, **caractérisée en ce que** l'ensemble de lettrage (21, 61) est disposé sur l'ensemble se déplaçant dans l'axe Z (23, 63), l'ensemble de lettrage (21, 61) glissant vers le haut et vers le bas sur l'ensemble se déplaçant dans l'axe Z (23, 63), l'ensemble se déplaçant dans l'axe Z (23, 63) étant disposé sur l'ensemble se déplaçant dans l'axe X (22, 62) et l'ensemble se déplaçant dans l'axe Z (23, 63) et l'ensemble de lettrage (21, 61) glissant ensemble sur l'ensemble se déplaçant dans l'axe X (22, 62).

3. Découpeuse selon la revendication 1, **caractérisée en ce que** la base de montage (42, 82) et l'ensemble se déplaçant dans l'axe X (22, 62) sont connectés fixement, la base de montage (42, 82) est pourvue d'un canal pour convoyer le morceau de matériau, et la base de montage (42, 82) inclut une première section de montage (421, 821) et une seconde section de montage (422, 822), la première section de montage (421, 821) étant connectée à la seconde section de montage (422, 822) suivant un certain angle pour former une structure en forme de L, et une base de mèche (423, 823) adaptée pour l'ensemble de lettrage (21, 61) étant prévue sur la seconde section de montage (422, 822).

4. Découpeuse selon la revendication 1, **caractérisée en ce que** l'au moins un mécanisme de lettrage (2, 6) est défini pour être un seul mécanisme de lettrage (2), et que le mécanisme de lettrage (2) est prévu fixement sur la plate-forme de travail (41, 81) par l'intermédiaire de la base de montage correspondante (42), ou que le mécanisme de lettrage (2) est connecté à la plate-forme de travail (41, 81) de manière à pouvoir coulisser par l'intermédiaire d'un ensemble coulissant (64).

5. Découpeuse selon la revendication 1, **caractérisée en ce que**, lorsque l'au moins un mécanisme de lettrage (2, 6) est défini pour être deux mécanismes de lettrage ou plus (6), au moins un mécanisme de lettrage (6) est fixé sur la plate-forme de travail (41, 81), et qu'au moins un mécanisme de lettrage (6) est connecté de manière à pouvoir coulisser à la plate-forme de travail (41, 81) par l'intermédiaire d'un ensemble coulissant (64), et que chaque mécanisme de lettrage (6) est disposé côte à côte dans le sens de l'axe Y.

6. Découpeuse selon la revendication 1, **caractérisée en ce que**, lorsque l'au moins un mécanisme de lettrage (2, 6) est défini pour être deux mécanismes de lettrage ou plus (6), les mécanismes de lettrage (6) sont tous disposés de manière mobile sur la plate-forme de travail (41, 81) par l'intermédiaire d'un ensemble coulissant (64), et que chaque mécanisme de lettrage (6) est disposé côte à côte dans le sens de l'axe Y.

7. Découpeuse selon la revendication 1, **caractérisée en ce que**, lorsque l'au moins un mécanisme de lettrage (2, 6) est défini pour être deux mécanismes de lettrage ou plus (6), les mécanismes de lettrage (6) sont disposés fixement sur la plate-forme de travail (41, 81) et que chaque mécanisme de lettrage (6) est disposé côte à côte dans le sens de l'axe Y.

8. Découpeuse selon l'une quelconque des revendications 4, 5 et 6, **caractérisée en ce que** l'ensemble coulissant (64) est disposé sur la plate-forme de travail (41, 81), l'ensemble coulissant (64) étant connecté électriquement au système de commande, et l'ensemble coulissant (64) comprenant une base coulissante (641) et une première unité d'entraînement (642), la base coulissante (641) étant connectée à la première unité d'entraînement (642) et la base coulissante (641) étant connectée fixement à la base de montage (42, 82).

9. Découpeuse selon la revendication 8, **caractérisée en ce que** la première unité d'entraînement (642) comprend une première barre filetée (643) et un premier moteur (644), le fond de la base coulissante (641) étant pourvue d'un siège connecté par un écrou (645) qui est emmanché sur la première barre filetée (643), et la première barre filetée (643) étant connectée au premier moteur (644).

10. Découpeuse selon la revendication 1, **caractérisée en ce que** l'ensemble se déplaçant dans l'axe X (22, 62) est un moteur linéaire qui comprend un corps de moteur (221) et un siège de moteur (222) coulissant sur le corps de moteur (221), et que le siège de moteur (222) est connecté fixement à l'ensemble se déplaçant dans l'axe Z (23, 63).

11. Découpeuse selon la revendication 1, **caractérisée en ce que** l'ensemble déplaçant dans l'axe X (22, 62) comprend une première base (621), une seconde unité d'entraînement (622) et une première plaque coulissante (623), la seconde unité d'entraînement (622) et une première plaque coulissante (623) étant toutes deux disposées sur la première base (621), la première base (621) étant connectée fixement à la base de montage (42, 82), la première base (621) étant pourvue d'un premier rail de coulissement (624) pour faire glisser la première plaque coulissante (623), la première plaque coulissante (623) étant connectée fixement à l'ensemble se déplaçant dans l'axe Z (23, 63), et la première plaque coulissante (623) étant connectée à la seconde unité d'entraînement (622).

12. Découpeuse selon la revendication 11, **caractérisée en ce que** le bord le plus court de la première plaque coulissante (623) est disposé verticalement sur la base de montage (42, 82), la seconde unité d'entraînement (622) comprend un deuxième moteur (6221) et une deuxième barre filetée (6222), le deuxième moteur (6221) étant connecté à la deuxième barre filetée (6222) et la deuxième barre filetée (6222) étant connecté de manière à pouvoir coulisser à la première plaque coulissante (623).

13. Découpeuse selon la revendication 1, **caractérisée en ce que** l'ensemble se déplaçant dans l'axe Z (23, 63) comprend une deuxième base (231, 631), un troisième moteur (232, 632) et une troisième barre filetée (233, 633), le troisième moteur (232, 632) et la troisième barre filetée (233, 633) étant disposés sur la deuxième base (231, 631), la deuxième base (231, 631) étant pourvue d'un deuxième rail de coulissement (234, 634), la troisième barre filetée (233, 633) et le deuxième rail de coulissement (234, 634) étant disposés en parallèle dans le sens vertical, la troisième barre filetée (233, 633) et le troisième moteur (232, 632) étant connectés, la deuxième base (231, 631) étant connectée fixement à l'ensemble se déplaçant dans l'axe X (22, 62) et la troisième barre filetée (233, 633) et le deuxième rail de coulissement (234, 634) étant connectés de manière à pouvoir coulisser à l'au moins un ensemble de lettrage (21, 61).

14. Découpeuse selon la revendication 13, **caractérisée en ce que** la deuxième base (231, 631) est pourvue d'une pluralité de ressorts amortisseurs de levage (235, 635), une extrémité de chaque ressort amortisseur de levage (235, 635) étant connectée fixement à la deuxième base (231, 631), et l'autre extrémité de chaque ressort amortisseur de levage (235, 635) étant connectée fixement à l'au moins un ensemble de lettrage (21, 61).

15. Découpeuse selon la revendication 14, **caractérisée en ce que** la deuxième base (231, 631) est en outre pourvue d'un capteur de marque colorée (236, 636), et que le capteur de marque colorée (236, 636) est connecté électriquement au système de commande.

16. Découpeuse selon la revendication 3, **caractérisée en ce que** l'ensemble de lettrage (21, 61) comprend une troisième base (211, 611) et un ou plusieurs tabliers d'outil (212, 612), la troisième base (211, 611) étant connectée de manière à pouvoir coulisser à l'ensemble se déplaçant dans l'axe Z (23, 63), le tablier d'outil (212, 612) étant disposé sur la troisième base (211, 611), le tablier d'outil (212, 612) étant pourvu d'un outil de coupe (613) qui correspond à la base de mèche (423, 823) sur la base de montage (42, 82).

17. Découpeuse selon la revendication 16, **caractérisée en ce que** la troisième base (211, 611) est pourvue d'un troisième rail de coulissement (216, 616) qui est disposé horizontalement dans le sens de l'axe X, la troisième base (211, 611) est pourvue de deux tabliers d'outil ou plus (212, 612), au moins un tablier d'outil (212, 612) étant disposé sur le troisième rail de coulissement (216, 616), et chaque tablier d'outil (212, 612) disposé sur le troisième rail de coulissement (216, 616) étant connecté à une quatrième barre filetée (214, 614) et à un quatrième moteur (215, 615) qui correspond au tablier d'outil (212, 612).
